(19) Europäisches Patentamt
European Patent Office
Office européen des brevets

(11) **EP 3 543 901 B1**

(12) **EUROPÄISCHE PATENTSCHRIFT**

(45) Veröffentlichungstag und Bekanntmachung des Hinweises auf die Patenterteilung:
**07.02.2024   Patentblatt 2024/06**

(21) Anmeldenummer: **19020079.0**

(22) Anmeldetag: **19.02.2019**

(51) Internationale Patentklassifikation (IPC):
**G06V 10/24** (2022.01)      **G06V 20/52** (2022.01)

(52) Gemeinsame Patentklassifikation (CPC):
**G06V 20/52; G06V 10/245;** G06T 2207/30204

(54) **VORRICHTUNG UND VERFAHREN ZUR ROBUSTEN ERMITTLUNG DER POSITION, AUSRICHTUNG, IDENTITÄT UND AUSGEWÄHLTER ZUSTANDSINFORMATIONEN VON OBJEKTEN**

DEVICE AND METHOD FOR ROBUST DETERMINATION OF THE POSITION, ORIENTATION, IDENTITY AND SELECTED STATUS INFORMATION OF OBJECTS

DISPOSITIF ET PROCÉDÉ DE DÉTERMINATION FIABLE DE LA POSITION, DE L'ORIENTATION, DE L'IDENTITÉ ET DES INFORMATIONS D'ÉTAT SÉLECTIONNÉES D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2018   EP 18159237**

(43) Veröffentlichungstag der Anmeldung:
**25.09.2019   Patentblatt 2019/39**

(73) Patentinhaber: **Plapp, Johannes**
**81249 München (DE)**

(72) Erfinder: **Plapp, Johannes**
**81249 München (DE)**

(74) Vertreter: **Schaich, Axel**
**Adam-Berg-Straße 103**
**81735 München (DE)**

(56) Entgegenhaltungen:
**WO-A1-2015/179668     JP-B2- 6 102 930**

- **Amos R Omondi ET AL: "FPGA Implementations of Neural Networks Edited by", , 31. Dezember 2006 (2006-12-31), XP055280303, Gefunden im Internet: URL:http://lab.fs.uni-lj.si/lasin/wp/IMIT_files/neural/doc/Omondi2006.pdf [gefunden am 2016-06-14]**

- **NURVITADHI ERIKO ET AL: "Accelerating Binarized Neural Networks: Comparison of FPGA, CPU, GPU, and ASIC", 2016 INTERNATIONAL CONFERENCE ON FIELD-PROGRAMMABLE TECHNOLOGY (FPT), IEEE, 7. Dezember 2016 (2016-12-07), Seiten 77-84, XP033098828, DOI: 10.1109/FPT.2016.7929192 [gefunden am 2017-05-15]**
- **YAO LU ET AL: "Optasia : A Relational Platform for Efficient Large-Scale Video Analytics", PROCEEDINGS OF THE SEVENTH ACM SYMPOSIUM ON CLOUD COMPUTING, SOCC '16, 1. Januar 2016 (2016-01-01), Seiten 57-70, XP055660642, New York, New York, USA DOI: 10.1145/2987550.2987564 ISBN: 978-1-4503-4525-5**
- **Johannes Plapp: "The OC1 Algorithm On Classification, Decision Trees and Randomized Search of Oblique Linear Splits", , 13. August 2014 (2014-08-13), Seiten 1-60, XP055656669, Munich Gefunden im Internet: URL:http://www.johannes-plapp.de/OC1.zip [gefunden am 2020-01-10]**

- HAEUSSER PHILIP ET AL: "Associative Deep Clustering: Training a Classification Network with No Labels", 14. Februar 2019 (2019-02-14), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 18 - 32, XP047502658, ISBN: 978-3-319-10403-4 [gefunden am 2019-02-14]
- WANG LIZHE ET AL: "A Parallel File System with Application-Aware Data Layout Policies for Massive Remote Sensing Image Processing in Digital Earth", IEEE TRANSACTIONS ON PARALLEL AND DISTRIBUTED SYSTEMS, IEEE SERVICE CENTER, LOS ALAMITOS, CA, US, Bd. 26, Nr. 6, 1. Juni 2015 (2015-06-01), Seiten 1497-1508, XP011581127, ISSN: 1045-9219, DOI: 10.1109/TPDS.2014.2322362 [gefunden am 2015-05-12]

**Beschreibung**

Die Erfindung betrifft ein Verfahren und Vorrichtung zur simultanen Ermittlung der Position, Ausrichtung, Identität und ausgewählter Zustandsinformationen von Objekten in einem definierten Bereich, und bezieht sich insbesondere auf ein Verfahren und eine Vorrichtung zur dreidimensionalen Echtzeitlokalisierung von Objekten in einem definierten, großen Bereich mittels fest montierter, optischer Erfassungsvorrichtungen und zumindest einer visuellen Markierung an einem zu lokalisierenden Objekt.

Die Lokalisierung von beweglichen Objekten, wie beispielsweise Fahrzeugen, Paketen, Paletten, sonstigen Gegenständen oder auch Personen in Echtzeit ist in der Logistik eine zentrale Fragestellung. Insbesondere für Fahrzeuge ist dies nützlich, um Fahrwege nachverfolgen und optimieren zu können, oder um diese autonom zu steuern. Auch die Lokalisierung anderer Arten von Objekten ist ein wichtiger Faktor in der modernen Logistik, da dadurch beispielsweise das Handling von Objekten vollautomatisch vorgenommen werden kann.

Für beispielsweise Fahrzeuge als einer Art der beweglichen Objekte werden derzeit häufig on-board Sensoren, wie beispielsweise Kameras, Radar und Laser-Scanner (LIDAR), verwendet. Allen Sensoren auf dem Fahrzeug ist jedoch ein Problem dahingehend gemeinsam, dass sie erhöhter Abnutzung ausgesetzt sind und dadurch entsprechend aufwendig konstruiert sein müssen. Darüber hinaus gibt es sehr viele Bestandsfahrzeuge, die nicht über moderne Sensoren verfügen, so dass z. B. die Ausrichtung oder der Beladezustand vom Fahrzeug nicht automatisch erkannt werden kann.

Um dieses Problem zu umgehen, wurden Systeme vorgeschlagen, bei welchen Hauptkomponenten nicht am Objekt, sondern fest im Gebäude verbaut sind. Ein Beispiel sind funkwellen-basierte Systeme, bei welchen jedoch sämtlich Interferenz-Problemen mit Stahl und Wasser auftreten, und kamera-basierte Systeme.

Beispielsweise ist zur Echtzeitlokalisierung von Objekten in einem definierten Bereich mittels fest montierter, optischer Erfassungsvorrichtungen und zumindest einer visuellen Markierung an einem zu lokalisierenden Objekt ein auf Markern basierendes lokales Ortungssystem bekannt, das eine echtzeitnahe Ortung von Objekten auf einem Betriebsgelände erlaubt. Hierbei werden zur Bestimmung der Ortungskoordinaten beweglicher Objekte an beispielsweise einer Decke einer Halle in vorbestimmten Lagen angeordnete Videokameras eingesetzt. Eine Identifikation und Ortung der beweglichen Objekte kann sodann über an Oberflächen der beweglichen Objekte sichtbar angebrachte Codetafeln, die automatisch aus Kamerabildern über Bildanalysealgorithmen erkannt werden können, erfolgen. Über die bekannte Lage der Kamera kann die Position und die Ausrichtung der Codetafeln berechnet werden. Durch die Ortung und die ermittelte Ausrichtung der beweglichen Objekte kann damit die Position beispielsweise aufgenommener oder eingelagerter Ware bestimmt werden. Die bekannte Anordnung integriert hierbei vorhandene Infrastrukturen und greift auf bereits bestehende Infrastrukturen der WLAN-Kommunikation und Videoüberwachung zurück, um Ergebnisse der Ortung an vorbestimmte Schnittstellen weiterzugeben.

Ein solches kamera-basiertes System weist jedoch aufgrund der Konzeption mit Netzwerkkameras bzw. vernetzten Kameras einige Schwachstellen auf. Beispielsweise führt ein Streamen von Bilddaten zwangsläufig zu einer hohen Latenzzeit (ca. 2s), und ist darüber hinaus aufgrund der proportional wachsenden Bandbreitenanforderung nicht auf größere Bereiche skalierbar. Einige der bislang vorgeschlagenen Systeme sind auch auf flach angebrachte Marker limitiert und benötigen die Position des Objektes in der z-Achse (Höhe) zur Berechnung der x-y-Position.

Außerdem ist es einigen Systemen nicht möglich, die Position und Ausrichtung des Objektes anhand einer einzelnen optischen Markierung in allen drei Achsen zu bestimmen. Das Anbringen mehrerer Markierungen ist aufgrund des benötigten Platzes in der Praxis oft umständlich. Zusätzlich muss für diese Systeme sichergestellt werden, dass zu jedem Zeitpunkt alle Marker unverdeckt sind. Manche Systeme benötigen zur Erfassung der Position in allen drei Dimensionen eine unverdeckte Sicht mehrerer Kameras auf die gleiche Markierung. Dies erhöht den Bedarf an Kameras und damit die Kosten einer Installation in der Praxis signifikant.

Manche dieser Systeme haben den Nachteil, dass Sie spezielle Eigenschaften der visuellen Markierung (z.B. eine besondere Reflektivität) und/oder zusätzlich spezielle emittierende Geräte benötigen. Diese Anforderungen schränken die Praxistauglichkeit und Skalierbarkeit ein.

Alle derartigen Systeme haben den Nachteil, dass sie nur bei vollständiger Lesbarkeit der (bzw. aller) angebrachten visuellen Markierung(en) funktionieren. Selbst eine Teilverdeckung der visuellen Markierung macht die Lesbarkeit und damit die Lokalisierung unmöglich, auch wenn das Objekt an sich noch gut sichtbar ist. Im Logistikkontext sind die Objekte stets gut sichtbar, während visuelle Marker temporär oft unlesbar werden, z.B. durch schlecht Lichtbedingungen oder (Teil-)Verdeckungen wie durch Abhängungen für Lampen und Schilder, Regalstreben, oder auch Aufbauten am zu lokalisierenden Objekt wie hoch ausfahrbare Staplergabeln. Zusätzlich ist bisher kein Verfahren bekannt, das bei der robusten Erkennung die Stetigkeit der ermittelten Positionen und Ausrichtung bei Wechsel zwischen Erkennung von visueller Markierung und dem Objekt sicherstellt. Dies ist für viele Anwendungsfälle kritisch, z.B. zur Steuerung von autonomen Fahrzeugen.

Manche derartigen Systeme haben den Nachteil, dass durch die Lokalisierung weitere Zustandsinformationen (z. B. Beladezustand, Ausrichtung) des zu lokalisierenden Objektes nicht direkt erkennbar sind und/oder zusätzliche Sensoren auf den Fahrzeugen erfordern.

Manche derartigen Systeme haben den Nachteil, dass die Erfassung von Position, Ausrichtung und ausgewählter Zustandsinformationen nicht simultan durch eine Erfassungstechnologie erfolgen kann, d. h. es müssen mehrere Sensoren nacheinander abgefragt werden.

Die Druckschrift WO 2015/179668 A1 offenbart ferner für verbesserte Interaktivität in einem Vergnügungspark mit passiven Verfolgungselementen ein dynamisches Signal-Rausch-Verhältnis-Verfolgungssystem, das die Erfassung und Verfolgung von Maschinen und Personen innerhalb des Sichtfeldes des Verfolgungssystems ermöglicht. Das Verfolgungssystem kann einen Sender umfassen, der so konfiguriert ist, dass er elektromagnetische Strahlung innerhalb eines Bereichs aussendet, einen Detektor, der so konfiguriert ist, dass er elektromagnetische Strahlung erfasst, die vom Bereich zurückreflektiert wird, und eine Steuereinheit, die so konfiguriert ist, dass sie Signale vom Detektor auswertet und die Maschinen oder andere Geräte als Ergebnis dieser Auswertung steuert.

Die Druckschrift JP 6 102930 B2 offenbart außerdem ein Verfahren zum Erfassen eines Objekts, das in einen Überwachungsbereich eintritt, wobei das Verfahren von einer Projektionsraum-Überwachungsvorrichtung ausgeführt wird, wobei das Verfahren die folgenden Schritte umfasst:: Aufnehmen eines stereoskopischen Bilds von einem Paar von Bildsensoren; Assoziieren des stereoskopischen Bilds, um eine Tiefenkarte zu erhalten, die Entfernungspixel umfasst, wobei jedes Entfernungspixel einen radialen Abstand entlang einer jeweiligen Pixelzeile und einen Raumwinkel innerhalb des horizontalen und vertikalen Sichtfeldes, das mit der Erfassung des stereoskopischen Bildes assoziiert ist, enthält; Umwandeln der Entfernungspixel in Polarkoordinaten, um als entsprechende Wertepaare dargestellt zu werden, und Markieren derjenigen Entfernungspixel, die innerhalb der für den Überwachungsbereich definierten Schutzgrenze liegen; Erfassen eines Satzes von Pixeln; Erfassen eines zweidimensionalen Histogramms, das den Raumwinkelbereich des horizontalen und vertikalen Sichtfeldes quantisiert; und Speichern der markierten Pixel in einer entsprechenden Zelle des Histogramms und Clustern von Zellen in dem Histogramm, um das Eindringen von Objekten innerhalb der Schutzgrenze zu erkennen, die einen Schwellenwert für die minimale Objektgröße erfüllt.

Aus dem Stand der Technik sind ferner als Abhandlungen im vorstehenden Kontext bekannt: Amos R Omondi ET AL: "FPGA Implementations of Neural Networks", 31. Dezember 2006, XP055280303; NURVITADHI ERIKO ET AL: "Accelerating Binarized Neural Networks: Comparison of FPGA, CPU, GPUn and ASIC", 2016 INTERNATIONAL CONFERENCE ON FIELD PROGRAMMABLE TECHNOLOGY (FPT), IEEE, 7. Dezember 2016, Seiten 77-84, XP033098828; YAO LU ET AL: "Optasia: A Relational Platform for Efficient Large-Scale Video Analytics", PROCEEDINGS OF THE SEVENTH ACM SYMPOSIUM ON CLOUD COMPUTING; SOCC'16, 1. Januar 2016, Seiten 57-70, XP055660642; Johannes Plapp: "The OC1 Algorithm On Classification, Decision Trees and Randomized Search of Oblique Linear Splits", 13. August 2014, Seiten 1 bis 60, XP055656669; und HAEUSSER PHILIP ET AL: "Associative Deep Clustering: Training a Classification Network With No Labels", 14. Februar 2019, ROBOCUP 2008: ROBOT SOCCER WORLDCUP XII; [LECTURE NOTES IN COMPUTER SCIENCE; LECT. NOTES COMPUTER], SPRINGER INTERNATIONAL PUBLISHING, CHAM, Seiten 18-32, XP047502658.

Der Erfindung liegt daher als eine Aufgabe zugrunde, ein Verfahren und eine Vorrichtung zur simultanen dreidimensionalen Echtzeitlokalisierung, Erfassung der Ausrichtung und ausgewählter Zustandsinformationen von Objekten in einem definierten Bereich zu schaffen, welche die vorgenannten Nachteile überwinden, zumindest die Latenzzeit bei der Übertragung von Bilddaten verringern, nur eine visuelle Markierung am Objekt benötigen, welche nur temporär für nur eine Kamera sichtbar sein muss, weitere Eigenschaften über die Objekte erkennen kann und auf sehr große Bereiche skalierbar ist.

Diese Aufgabe wird durch eine Vorrichtung zur Ermittlung der Position, Ausrichtung, Identität und ausgewählter Zustandsinformationen von Objekten in einem definierten Bereich mit den Merkmalen des Patentanspruchs 1 sowie ein Verfahren zur Ermittlung der Position von Objekten in einem definierten Bereich mit den Merkmalen des Patentanspruchs 11 gelöst. Vorteilhafte Weiterbildungen der Erfindung sind Gegenstand der beigefügten Unteransprüche.

Der Erfindung liegt die allgemeine Idee zugrunde, ein Verfahren und eine Vorrichtung zur Echtzeitlokalisierung von Objekten in einem definierten Bereich mittels einer Vielzahl von feststehend montierten, optischen Erfassungsvorrichtungen mithilfe sowohl einer visuellen Markierung am zu lokalisierenden Objekt als auch visueller Merkmale am bzw. des zu lokalisierenden Objekt(s) selbst durchzuführen. Jede Erfassungsvorrichtung (EV) besteht aus zumindest einer hochauflösenden, digitalen Kamera und zumindest einer schnell und direkt an diese angekoppelte Rechen- und Kommunikationseinheit (REK). Beispielsweise können eine Kamera und eine Rechen- und Kommunikationseinheit in einem gemeinsamen Gehäuse aufgenommen und als solches die Erfassungsvorrichtung an einer vorhandenen, festen Struktur in dem definierten Bereich (z. B. an einer Deckenkonstruktion oder an Säulen) angebracht werden. Die Erfassung und Verarbeitung der visuellen Markierung am zu lokalisierenden Objekt als auch der visuellen Merkmale am bzw. des zu lokalisierenden Objekt(s) selbst erfolgt parallel. Zur Erhöhung der Robustheit kann daher bei einer temporär nicht lesbaren Marke eines Objekts auf visuelle Merkmale am zu lokalisierenden Objekt zurückgegriffen werden. Hierzu wird ein Algorithmus darauf trainiert, die zu lokalisierenden Objekte auch ohne Marker zu erkennen und dann mit Hilfe eines Autokorrelations-Approximations-Verfahren zu lokalisieren.

Jede Erfassungsvorrichtung erfasst alle zu lokalisierenden Objekte in dem für sie sichtbaren Bereich anhand ihres jeweils sichtbaren Markers oder bei nicht sichtbarem Marker anhand der visuellen Merkmale, berechnet mittels der Rechen- und Kommunikationseinheit deren absolute Positionen und sendet diese über ein vorbestimmtes Netzwerk. Aufgrund der schnellen und direkten Ankopplung der Rechen- und Kommunikationseinheit an die Kamera in der Erfassungsvorrichtung kann von der Kamera erfasste Information in der Rechen- und Kommunikationseinheit schnell vorverarbeitet werden, und sind als Ausgabe der Rechen- und Kommunikationseinheit entsprechend wesentlich geringere Datenmengen an nachgeschaltete Systemkomponenten zu übertragen.

Ein das Verfahren und die Vorrichtung ausgestaltendes System ist dadurch auf große Flächen mit hunderten von Kameras skalierbar und dazu ausgelegt, Latenzzeiten von weniger als 0,1 Sekunden zu erreichen und die Position und Orientierung bzw. Ausrichtung von Objekten in allen drei Dimensionen bestimmen zu können. Zudem kann das System dazu verwendet werden, zusätzliche Informationen über das lokalisierte Objekt (z. B. den Beladungszustand) zu erfassen.

Insbesondere wird erfindungsgemäß - im Gegensatz zu bekannten Anordnungen, die entweder mehrere Kameras oder mehrere Marker an einem Objekt benötigen, um dieses dreidimensional zu verfolgen bzw. zu tracken - nur (genau) eine Kamera und (genau) eine visuelle Markierung (oder Objektsegmentierung) benötigt, um eine 3D-Position und eine zugehörige Ausrichtung zu berechnen.

Im Einzelnen wird die Aufgabe gelöst durch eine Vorrichtung zur Ermittlung der Position, Ausrichtung, Identität und ausgewählter Zustandsinformationen von Objekten in einem definierten Bereich, mit zumindest nur einer optischen Erfassungsvorrichtung, die an einer baulichen Struktur fest montiert und dazu angeordnet ist, zumindest ein zu lokalisierendes Objekt visuell zu erfassen. Die zumindest eine optische Erfassungsvorrichtung weist zumindest eine Kameravorrichtung und zumindest eine mit der Kameravorrichtung über eine drahtgebundene Verbindung direkt gekoppelte Rechen- und Kommunikationseinheit auf, die dazu angeordnet ist, auf der Grundlage sowohl nur einer am Objekt angebrachten visuellen Markierung als auch basierend auf einer Objektsegmentierung angelernter visueller Merkmale des gesamten Objekts mit anschließender Bestimmung charakteristischer Punkte des Objekts, mit einer tracking-basierten Zuordnung von visuellen Markierungen zu erkannten Objekten auf Grundlage einer Autokorrelation die absolute Position, Ausrichtung, ausgewählte Zustandsinformationen und Identität jedes zu lokalisierenden Objekts zu berechnen. Die Kameravorrichtung ist dazu angeordnet, zumindest ein Bild des definierten Bereichs aufzunehmen, die optische Erfassungsvorrichtung ist dazu angeordnet, Daten des aufgenommenen Bilds mit einer ersten Datenmenge über die drahtgebundene Verbindung an die Rechen- und Kommunikationseinheit zu übertragen, und die Rechen- und Kommunikationseinheit ist dazu angeordnet, die Daten des aufgenommenen Bilds zunächst direkt zu verarbeiten und verarbeitete Daten mit einer zweiten Datenmenge, die kleiner ist als die erste Datenmenge, an eine externe Servervorrichtung zu übertragen. Die Rechen- und Kommunikationseinheit ist dazu angeordnet ist, das von der Kameravorrichtung aufgenommene Bild zu empfangen, das Bild in eine passende Auflösung zu skalieren, ein 2D-Bild mit Helligkeitswerten zu erzeugen und das erzeugte 2D-Bild an zumindest einen Prozess auf zumindest einer CPU zu übertragen und in einen gemeinsamen Speicherbereich der Rechen- und Kommunikationseinheit zu verschieben; das in den gemeinsamen Speicherbereich verschobene 2D-Bild in eine Mehrzahl von N Teilausschnitten ($N \geq 2$) aufzuteilen, jedem Teilausschnitt einen dedizierten Prozess zuzuweisen und die Teilausschnitte mittels der zugewiesenen Prozesse parallel zu bearbeiten; von den zugewiesenen Prozessen erhaltene Ergebnisse mittels eines Kollektorprozesses zu sammeln, eine Deduplikation mehrfach erfasster visueller Markierungen durchzuführen und deduplizierte Resultate als Bildkoordinaten und Identitäten aller visuellen Markierungen zu erhalten; die Bildkoordinaten mittels eines Prozesses zur Pose Estimation auf der Grundlage von zumindest intrinsischen Parametern der Kamerakalibrierung, der Bildkoordinaten der visuellen Markierung und einer realen Größe der visuellen Markierung als Eingabeparameter und einer vorbestimmten Koordinatentransformation in 3D-Absolutkoordinaten umzurechnen und einen Rotationsvektor und einen Translationsvektor in einem 3D-Koordinatensystem der Kameravorrichtung zu bestimmen, und den Rotationsvektor und den Translationsvektor mittels einer extrinsischen Kamera-Kalibrierung in Form einer Transformationsmatrix in ein Absolut-Koordinatensystem zu transformieren; und deduplizierte und stetige Resultate in Form von Position, Ausrichtung und Identität aller zu lokalisierenden Objekte auf der Grundlage einer Zuordnung erfasster visueller Markierungen zu Tracks von erfassten Objekten, die durch einen Tracking-Verfahren über mehrere Bilder hinweg erstellt werden, durch berechnen von Positionen von Objekten, für die keine visuelle Markierung lesbar war, unter Verwendung eines Autokorrelations-Approximations-Verfahrens zu erhalten.

Vorteil der vorgenannten Parallelisierung sind unter anderem eine höhere Energieeffizienz, eine schnellere Bearbeitung und damit eine geringere Latenzzeit. Für die vorgenannte Lokalisierung wird bevorzugt ein für neuronale Netzwerke optimierter Co-Prozessor wie eine GPU, FPGA oder ASIC verwendet. Vorteil eines separaten Prozessors und der parallelen Bearbeitung sind unter anderem eine höhere Energieeffizienz, eine schnellere Bearbeitung und damit eine geringere Latenzzeit. Darüber hinaus können durch die vorgenannte Transformation in das Absolut-Koordinatensystem Daten sinnvoll genutzt werden. Außerdem können dadurch mehrere Erfassungseinheiten für eine größere Fläche verwendet werden - in Bereichen, in denen sich deren Erfassungsgebiet überlagert, geben beide Kameras dann dieselbe Absolut-Position zurück. Hierdurch wird es möglich, dass die absolute Position, Ausrichtung und ausgewählte Zustandsinformationen eines Objektes mit nur genau einem Marker von genau einer Kamera bestimmt werden können. Die Rechen- und Kommunikationseinheit ist somit vorteilhaft dazu angeordnet, Position Ausrichtung, Identität und ausgewählte Zustandsinformationen lokalisierter Objekte mithilfe eines Tracking-Verfahrens zu verfolgen. Bevorzugt werden hierfür Tracks der Objekte über mehrere Bilder hinweg gespeichert und Objekte somit verfolgt. Bevorzugt werden erkannte visuelle Markierungen den Objekt-Tracks zugeordnet. Ein Vorteil hiervon ist, dass damit die Robustheit des Systems bei nicht durchgehend lesbaren visuellen Markierungen wesentlich erhöht werden kann. Bevorzugt wird zur Ermittlung der Position ein fehlerkorrigierender Algorithmus verwendet, da die Lokalisierung visueller Markierungen eine höhere Genauigkeit aufweisen kann als die Lokalisierung von Objekten anhand visueller Merkmale. Ein Vorteil des fehlerkorrigierenden Algorithmus ist daher die Vermeidung von Sprüngen bei der berechneten Position, wenn die visuelle Markierung nicht durchgehend lesbar ist. Dafür wird, wenn eine visuelle Markierung einem Objekt zugeordnet werden konnte, diese Zuordnung und die ermittelte Distanz als Offset zum Track gespeichert. Ein Vorteil davon ist, dass falls eine visuelle Markierung nicht mehr lesbar ist, die Position, Ausrichtung und Identität des Tracks mittels der erfassten Position des Objektes, des ermittelten Offsets und der bekannten Distanz zwischen visueller Markierung und Objekt bestimmt werden kann. Somit können deduplizierte Resultate in Form von Position, Ausrichtung und Identität aller zu lokalisierenden Objekte erhalten werden.

Bevorzugt ist die Erfassungsvorrichtung dazu angeordnet, mittels der Kameravorrichtung das zumindest eine zu lokalisierende Objekt in einem für sie sichtbaren Bereich zu erfassen und mittels der Rechen- und Kommunikationseinheit die absolute Position, die Ausrichtung und die Identität des zumindest einen zu lokalisierenden Objekts zu berechnen. Vorteilhaft ist es dadurch möglich, ein Bild eines definierten Bereichs zu erfassen und mittels der Rechen- und Kommunikationseinheit alle Objekte in diesem Bereich zu lokalisieren und deren absolute Position, Ausrichtung und erkennbare Zustandsparameter zu bestimmen. Hierfür ist die Rechen- und Kommunikationseinheit dazu angeordnet, die absolute Position und Ausrichtung einer Mehrzahl von visuellen Markierungen auf dem erfassten Bild zu bestimmen. Außerdem ist die Erfassungsvorrichtung bevorzugt dazu angeordnet, die Position, Ausrichtung und Zustandsinformationen von Objekten ohne lesbare visuelle Markierung anhand von gelernten Merkmalen zu bestimmen.

Bevorzugt ist die Erfassungsvorrichtung dazu angeordnet, mittels der Kameravorrichtung simultan ein Bild eines für sie sichtbaren Bereiches zu erfassen, mittels der Rechen- und Kommunikationseinheit in dem erfassten Bild zumindest ein Objekt auf der Grundlage der angelernten visuellen Merkmale zu erfassen und die absolute Position, die Ausrichtung und die Identität des zumindest einen Objekts zu berechnen.

Bevorzugt ist die Erfassungsvorrichtung dazu angeordnet, für die simultane Ermittlung der Position von Objekten in Echtzeit Latenzzeiten von weniger als 0,1 Sekunden aufzuweisen, und sowohl die Position als auch eine Ausrichtung und ausgewählte Zustandsinformationen von Objekten in drei Dimensionen zu bestimmen. Diese geringe Latenzzeit erweitert den Nutzungsbereich der Erfassung ganz erheblich, z.B. für autonome Fahrzeuge und Echtzeit-Kontrolle von Packvorgängen. Durch die Erfassung der Position und Ausrichtung in drei Dimensionen können wertvolle Informationen erfasst werden, beispielsweise, in welcher Höhe sich ein Gegenstand gerade befindet, womit dann auf dessen aktuelles Fach in einem Regal geschlossen werden kann. Durch die Erfassung der Ausrichtung in drei Dimensionen können Marker in allen Lagen, also nicht nur parallel zum Boden angebracht werden. Das ist z.B. bei Fahrzeugen hilfreich - hier können Marker auch seitlich angebracht werden.

Bevorzugt weist die Rechen- und Kommunikationseinheit zumindest einen Grafikprozessor und/oder zumindest eine Mehrkern-CPU zur parallelisierten Echtzeitverarbeitung auf mehreren Prozessoren auf. Durch eine Parallelisierung werden eine höhere Energieeffizienz, eine schnellere Bearbeitung und damit eine geringere Latenzzeit erreicht.

Bevorzugt weist die Rechen- und Kommunikationseinheit zumindest einen besonders für die Verarbeitung neuronaler Netzwerke optimierten (Co-)-Prozessor auf.

Bevorzugt ist zur Erfassung der visuellen Markierungen in der Kameravorrichtung ein optischer Sensor angeordnet, wobei der optische Sensor ein mit wenigstens 1 Megapixel auflösender, digitaler Farbsensor oder ein monochromer Sensor ist. Durch eine hohe Auflösung können größere Flächen überwacht und/oder eine höhere Genauigkeit erzielt werden.

Bevorzugt ist die Rechen- und Kommunikationseinheit dazu angeordnet, Kalibrierungsdaten zu empfangen, Positionen von zu lokalisierenden Objekten und daran angebrachten visuellen Markierungen in dem aufgenommenen Bild zu berechnen und die berechneten Positionen in absolute Koordinaten der Objekte umzurechnen. Die Berechnung von Positionen und Identitäten visueller Markierungen in dem aufgenommenen Bild ist ebenfalls möglich. Vorteil einer Berechnung in direkter Verbindung mit der Kamera ist, dass auf die aufwändige Übertragung von Bilddaten über ein Netzwerk verzichtet werden kann und damit die Überwachung auch sehr großer Bereiche durch sehr viele Kameras möglich ist.

Bevorzugt ist die Rechen- und Kommunikationseinheit dazu angeordnet, erfasste visuelle Markierungen erfassten Objekten zuzuordnen, und somit die absolute Position, Ausrichtung und Identität aller im definierten Bereich befindlicher Objekte eindeutig zu bestimmen. Hierfür ist die Rechen- und Kommunikationseinheit bevorzugt dazu angeordnet, lokale und temporale bzw. temporäre Informationen zu verwenden. Die Verwendung temporaler Informationen hat den Vorteil, dass die Position, Ausrichtung und Identität von zu lokalisierenden Objekten auch bestimmt werden kann, wenn die daran angebrachte visuelle Markierung nicht durchgehend lesbar ist.

Bevorzugt werden bei der Vorrichtung extrinsische Kalibrierungsparameter, die eine Rotation und die Position der Erfassungsvorrichtung im Raum beschreiben, mittels eines im Voraus erstellten 3D-Modells eines Zielbereichs mit in 2D und 3D jeweils korrespondierenden Punkten bestimmt werden. Vorteil der Nutzung eines Referenzmodells ist, dass die extrinsische Kalibrierung für den Benutzer dadurch wesentlich schneller und einfacher ist, da die relevanten Punkte direkt ausgewählt werden können. Außerdem kann die Kalibrierung visuell dargestellt und somit Fehler leicht gefunden werden.

Bevorzugt werden bei der Vorrichtung extrinsische Kalibrierungsparameter, die eine Rotation und die Position der Erfassungsvorrichtung im Raum beschreiben, und mittels eines im Voraus erstellten 3D-Modells eines Zielbereichs und eines Marker-Boards bestimmt werden. Ein solches Marker-Board beinhaltet mehrere Marker in einer definierten Anordnung. Hierbei muss der Nutzer nur noch die Position des Marker-Boards in Absolut-Koordinaten festlegen. Dadurch kann die Kalibrierung für den Nutzer sehr schnell erfolgen.

Bevorzugt ist die Rechen- und Kommunikationseinheit dazu angeordnet, die Identität von Markern durch einen lernbasierten Algorithmus zu bestimmen, welcher mit beispielhaften Bildern von Markern angelernt wird.

Bevorzugt ist die Rechen- und Kommunikationseinheit dazu angeordnet, eine simultane Bestimmung der Position, Ausrichtung und ausgewählter Zustandsinformationen von komplexen Objekten zu bestimmen.

Darüber hinaus wird die Aufgabe auch gelöst durch ein Verfahren zur Ermittlung der Position von Objekten in einem definierten Bereich, mit den Schritten: Verfahren zur Ermittlung der Position von Objekten in einem definierten Bereich, mit den Schritten; Visuelles Erfassen eines zu lokalisierenden Objektes mit zumindest einer optischen Erfassungsvorrichtung, die an einer baulichen Struktur fest montiert ist, wobei die zumindest eine optische Erfassungsvorrichtung zumindest eine Kameravorrichtung und zumindest eine mit der Kameravorrichtung über eine drahtgebundene Verbindung direkt gekoppelte Rechen- und Kommunikationseinheit aufweist; Aufnehmen zumindest eines Bilds des definierten Bereichs mittels der Kameravorrichtung; Übertragen von Daten des aufgenommenen Bilds mittels der optischen Erfassungsvorrichtung mit einer ersten Datenmenge über die drahtgebundene Verbindung an die Rechen- und Kommunikationseinheit; und zunächst direktes Verarbeiten der Daten des aufgenommenen Bilds mittels der Rechen- und Kommunikationseinheit, wobei die Rechen- und Kommunikationseinheit eine absolute Position, eine Ausrichtung, ausgewählte Zustandsinformationen und eine Identität jedes zu lokalisierenden Objekts auf der Grundlage sowohl einer am Objekt angebrachten visuellen Markierung als auch angelernter visueller Merkmale des gesamten Objekts mit anschließender Bestimmung charakteristischer Punkte des Objekts mit einer tracking-basierten Zuordnung von visuellen Markierungen zu erkannten Objekten auf Grundlage einer Autokorrelation berechnet, und sodann Übertragen der verarbeiteten Daten mit einer zweiten Datenmenge, die kleiner ist als die erste Datenmenge, an eine externe Servervorrichtung. Von der Rechen- und Kommunikationseinheit wird das von der Kameravorrichtung aufgenommene Bild empfangen, wird das Bild in eine passende Auflösung skaliert, wird ein 2D-Bild mit Helligkeitswerten erzeugt und wird das erzeugte 2D-Bild an zumindest einen Prozess auf zumindest einer CPU übertragen und in einen gemeinsamen Speicherbereich der Rechen- und Kommunikationseinheit verschoben. Das in den gemeinsamen Speicherbereich verschobene 2D-Bild wird in eine Mehrzahl von N Teilausschnitten ($N \geq 2$) aufgeteilt, jedem Teilausschnitt wird ein dedizierter Prozess zugewiesen und die Teilausschnitte werden mittels der zugewiesenen Prozesse parallel bearbeitet. Von den zugewiesenen Prozessen erhaltene Ergebnisse werden mittels eines Kollektorprozesses gesammelt, eine Deduplikation mehrfach erfasster visueller Markierungen wird durchgeführt und deduplizierte Resultate werden als Bildkoordinaten und Identitäten aller visuellen Markierungen erhalten. Die Bildkoordinaten werden mittels eines Prozesses zur Pose Estimation auf der Grundlage von zumindest intrinsischen Parametern der Kamerakalibrierung, der Bildkoordinaten der visuellen Markierung und einer realen Größe der visuellen Markierung als Eingabeparameter und einer vorbestimmten Koordinatentransformation in 3D-Absolutkoordinaten umgerechnet und ein Rotationsvektor und ein Translationsvektor in einem 3D-Koordinatensystem der Kameravorrichtung werden bestimmt, und der Rotationsvektor und der Translationsvektor wird mittels einer extrinsischen Kamera-Kalibrierung in Form einer Transformationsmatrix in ein Absolut-Koordinatensystem transformiert.

Deduplizierte und stetige Resultate in Form von Position, Ausrichtung und Identität aller zu lokalisierenden Objekte auf der Grundlage einer Zuordnung erfasster visueller Markierungen zu Tracks von erfassten Objekten, die durch einen Tracking-Verfahren über mehrere Bilder hinweg erstellt werden, werden durch Berechnen von Positionen von Objekten, für die keine visuelle Markierung lesbar war, unter Verwendung eines Autokorrelations-Approximations-Verfahrens erhalten.

Visuelles Erfassen eines zu lokalisierenden Objektes mit zumindest einer optischen Erfassungsvorrichtung, die an einer baulichen Struktur fest montiert ist, wobei die zumindest eine optische Erfassungsvorrichtung zumindest eine Kameravorrichtung und zumindest eine mit der Kameravorrichtung über eine schnelle drahtgebundene Verbindung direkt gekoppelte Rechen- und Kommunikationseinheit aufweist; Aufnehmen zumindest eines Bilds des definierten Bereichs mittels der Kameravorrichtung; Übertragen von Daten des aufgenommenen Bilds mittels der optischen Erfassungsvorrichtung mit einer ersten Datenmenge über die schnelle drahtgebundene Verbindung an die Rechen- und Kommunikationseinheit; und zunächst direktes Verarbeiten der Daten des aufgenommenen Bilds mittels der Rechen- und Kommunikationseinheit, wobei die Rechen- und Kommunikationseinheit eine absolute Position und eine Ausrichtung jedes zu lokalisierenden Objekts auf der Grundlage sowohl einer am Objekt angebrachten visuellen Markierung als auch angelernter visueller Merkmale des gesamten Objekts berechnet, und sodann Übertragen der verarbeiteten Daten mit einer zweiten Datenmenge, die kleiner ist als die erste Datenmenge, an eine externe Servervorrichtung.

Die Erfindung wird nachstehend anhand eines bevorzugten Ausführungsbeispiels unter Bezugnahme auf die Zeichnung näher beschrieben. Es zeigen:

Fig. 1 eine schematische Darstellung eines grundlegenden Aufbaus einer Vorrichtung zur Ermittlung der Position von Objekten in einem definierten Bereich gemäß einem Ausführungsbeispiel;

Fig. 2 eine schematische Darstellung einer Erfassungsvorrichtung in der Vorrichtung nach Fig. 1;

Fig. 3 eine schematische Darstellung zur Erklärung der Funktionsweise einer Rechen- und Kommunikationseinheit in der Erfassungsvorrichtung nach Fig. 2;

Fig. 4 ein Ablaufdiagramm zur Erklärung einer parallelisierten Verarbeitung eines aufgenommenen Bilds;

Fig. 5 eine schematische Darstellung zur Aufteilung eines Bilds in 4 Ausschnitte;

Fig. 6 eine schematische Darstellung zur Aufteilung des Bilds in 3 Ausschnitte;

Fig. 7 ein Ablaufdiagramm zur Erklärung einer Bestimmung von Koordinaten in einem Zielsystem;

Fig. 8 ein Ablaufdiagramm zur Erklärung eines Tracking-Verfahrens von Objekten; und

Fig. 9 ein Ablaufdiagram zur Erklärung eines Autokorrelations-Approximations-Verfahrens zur Zuordnung von visuellen Markierungen zu Objekten

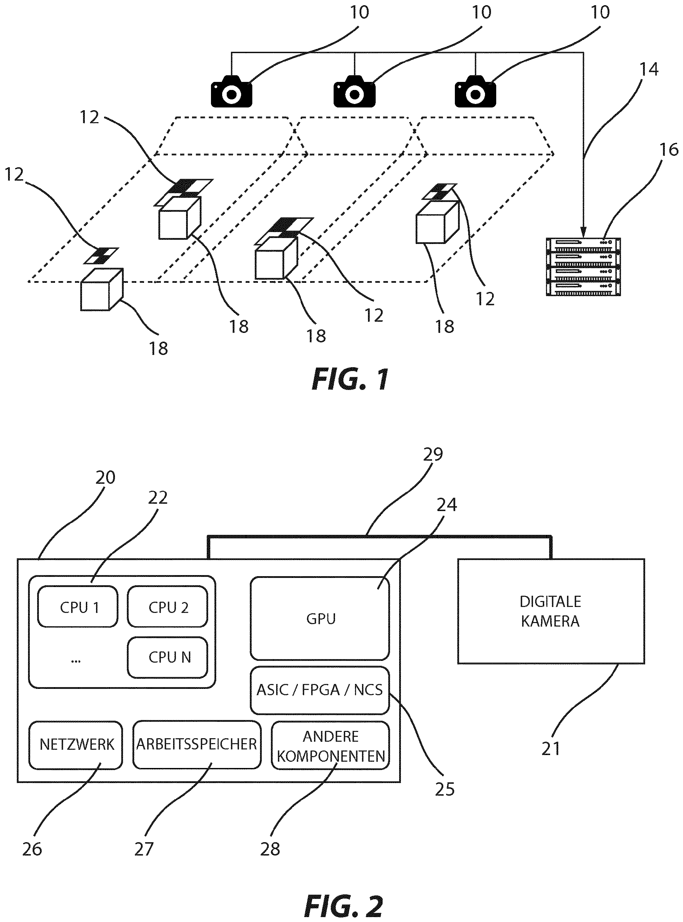

Fig. 1 zeigt eine schematische Darstellung eines grundlegenden Aufbaus einer Vorrichtung 100 zur Ermittlung der Position von Objekten in einem definierten Bereich gemäß einem Ausführungsbeispiel, und stellt ein grundlegendes Funktionsprinzip der Erfassung dar.

Gemäß Fig. 1 ist eine Vielzahl von Objektes 18 in einem vorbestimmten Bereich zu erfassen, und ist dazu in einem vorbestimmten Bereich eine Vielzahl von optischen Erfassungsvorrichtungen 10, die beispielsweise zumindest eine hochauflösende, digitale Kamera 21 beinhalten, an vorbestimmten Positionen, beispielsweise an einer Deckenkonstruktion oder Säulen derselben, feststehend und in einer vorbestimmten Ausrichtung montiert.

Die einzelnen Objekte 18 (hier beispielsweise 4 Stück) sind anhand angelernter, visueller Merkmale und auffindbar, und anhand visueller Markierungen unterscheidbar. Als visuelle Markierungen werden leicht maschinell sichtbare bzw. erkennbare Elemente, die nachstehend auch als Marker 12 bezeichnet werden, eingesetzt. Diese Marker 12 sind einerseits durch ihr Aussehen leicht auf einem digitalen Bild auffindbar, und enkodieren andererseits auch eine Identifikation oder Identität (ID). Dadurch ist jeder Marker 12 eindeutig identifizierbar. Beispiele für solche Marker sind AruCo-Marker, QR-Codes, große Zahlen, und dergleichen. Das Verfahren und die Vorrichtung wie hierin beschrieben sind nicht von einer speziellen Art der Markierung abhängig. Es können auch mehrere Marker 12 an einem Zielobjekt angebracht sein, um eine Sichtbarkeit aus mehreren Richtungen zu verbessern; jedoch kann stets ein Objekt bereits sicher lokalisiert werden, wenn nur genau ein Marker sichtbar ist oder wenn das Objekt anhand seiner visuellen Eigenschaften erkannt wird. Auch eine Anordnung von Markern auf einer dreidimensionalen Form (beispielsweise einem Würfel) ist möglich.

Jede Erfassungsvorrichtung 10 erfasst alle visuellen Markierungen bzw. Marker 12 in einem für sie sichtbaren Bereich, bestimmt oder erfasst die absoluten Positionen der Marker 12 und sendet die Ergebnisse zur weiteren Verarbeitung und Nutzung über ein Netzwerk 14 an zumindest einen Server 16, beispielsweise einen entfernten Server 16, der von an sich bekannter Bauart und aus handelsüblicher Hardware aufgebaut sein kann.

Die an den Server 16 gesendeten Daten können beispielsweise für eine Analyse der Fahrwege, eine Live-Darstellung von Objekten in einem Modell des Zielbereichs oder auch für eine Navigation der Objekte verwendet werden. Es wird angemerkt, dass in dem vorliegenden Ausführungsbeispiel die Rechen- und Kommunikationseinheit 20 ohne Bildschirm betreibbar sein kann, der Server 16 aber über einen Bildschirm verfügen kann.

Die Vorrichtung 100, die insoweit ein Erfassungssystem ausbildet, besteht somit insoweit grundlegend aus zumindest einer Erfassungsvorrichtung 10, zumindest einer visuellen Markierung 12 und zumindest einem Server 16. Ferner kann die Vorrichtung 100 eine Benutzeroberfläche zur Kalibrierung aufweisen, die noch zu beschreiben ist.

Fig. 2 zeigt eine schematische Darstellung einer Erfassungsvorrichtung in der Vorrichtung. Jede Erfassungsvorrichtung (EV) 10 besteht gemäß dem vorliegenden Ausführungsbeispiel aus der hochauflösenden, digitalen Kamera 21 und einer direkt verbundenen Rechen- und Kommunikationseinheit (REK) 20.

Gemäß Fig. 2 beinhaltet die Rechen- und Kommunikationseinheit 20 einen Mehrkern-Prozessor (CPU 1 bis CPU N) 22 und einen Grafikprozessor (GPU) 24, einen Prozessor 25, der für neuronale Netzwerke (ASIC/FPGA/Intel NCS/..) optimiert ist, eine Netzwerk-Schnittstelle 26 für beispielsweise ein lokales Netzwerk wie Ethernet oder WiFi, lokalen Speicher und/oder Arbeitsspeicher 27 sowie andere Komponenten 28, die üblicherweise in einer Rechen- und Kommunikationseinheit vorgesehen sein können, wie beispielsweise eine Eingabe/Ausgabe (I/O), einen Festspeicher wie beispielsweise ROM, einen Steckplatz für steckbare Speichermedien und dergleichen. In dem vorliegenden Ausführungsbeispiel kann die Rechen- und Kommunikationseinheit 20 ohne Bildschirm betrieben werden und ist für geringen Energieverbrauch optimiert. Es wird angemerkt, dass der Prozessor 25 optional bereitgestellt sein kann.

Zur Erfassung der Marker 12 ist in der Kamera 21 ein optischer Sensor (nicht gezeigt) verbaut. Der optische Sensor ist ein hochauflösender, digitaler Sensor, dessen Auflösung in dem vorliegenden Ausführungsbeispiel wenigstens 1 Megapixel beträgt. Der optische Sensor kann darüber hinaus sowohl ein Farbsensor als auch ein monochromer Sensor sein.

Dieser Sensor ist zusammen mit einem an sich bekannten Signalverarbeitungs- und Steuerungschip zu einer Kameravorrichtung wie beispielsweise der digitalen Kamera 21 verbaut und über eine Datenübertragungsschnittstelle 29, die beispielsweise eine Kabelverbindung wie beispielsweise eine USB-Verbindung oder eine serielle Schnittstelle sein kann, mit der Rechen- und Kommunikationseinheit 20 verbunden.

Über die kurze und schnelle Verbindung der Datenübertragungsschnittstelle 29 werden Bilddaten von der Kamera 21 an die Rechen- und Kommunikationseinheit 20 gesendet, und gleichzeitig auch die Kamera 21 mit Strom versorgt. Prinzipiell können dabei auch mehrere Kameras 21 mit einer Rechen- und Kommunikationseinheit 20 verbunden sein. Dies würde lediglich die Verarbeitung verlangsamen. Entscheidend ist, dass keine (vollständigen) Bilder bzw. umfangreichen Bilddaten über ein Netzwerk mit beschränkter Übertragungsgeschwindigkeit gesendet werden müssen, denn die Erfassungsvorrichtung 10 nimmt zunächst Bilder auf und verarbeitet diese sodann direkt.

Die Erfassungsvorrichtung 20 kann beispielsweise aus Komponenten wie einer Pi Camera v2.1 mit 8MP Sony IMX219PQ Exmor R CMOS-Bildsensor als Kamera 21 und einem Raspberry PI 3B mit 1.2 GHz Quad Core ARM cortex-a53 und LAN/WLAN mit Intel NCS als Rechen- und Kommunikationseinheit 20 bestehen.

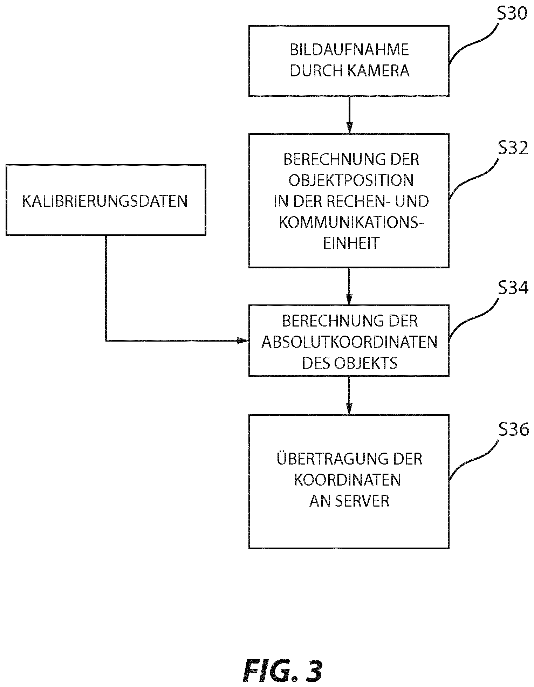

Fig. 3 zeigt ein Ablaufdiagramm zur Erklärung der grundlegenden Funktionsweise einer Rechen- und Kommunikationseinheit 20 in der Erfassungsvorrichtung 10.

In einem Schritt S30 wird zur Lokalisierung von Markern 12 bzw. Objekten 18 zunächst ein optisches Bild aufgenommen und an die Rechen- und Kommunikationseinheit 20 übertragen. Zunächst werden von der Rechen- und Kommunikationseinheit 20 in einem Schritt 32 die Positionen der Marker 12 und der Objekte 18 in dem aufgenommenen optischen Bild bestimmt. Mithilfe zusätzlicher Kalibrierungsdaten, die der Rechen- und Kommunikationseinheit 20 bereitgestellt werden, rechnet sodann die Rechen- und Kommunikationseinheit 20 in einem Schritt S34 diese Positionen in absolute Koordinaten der Marker 12 und Objekte 18 um. In einem Schritt S36 werden diese Koordinaten dann von der Rechen- und Kommunikationseinheit 20 an den Server 16 übertragen.

Zur Erkennung in Echtzeit (als Kriterium für eine Echtzeiterkennung wird in diesem Ausführungsbeispiel eine Latenzzeit von weniger als 0,1 Sekunden als hinreichend erachtet) muss das von der Kamera 21 aufgenommene Bild möglichst schnell verarbeitet werden. Dazu wird in dem vorliegenden Ausführungsbeispiel die Verarbeitung auf mehrere Prozessoren übertragen und dadurch parallelisiert. Hierbei kann der Grafikprozessor 24 und/oder die Mehrkern-CPU 22 verwendet werden. Zusätzlich kann für die Erkennung der Objekte 18 der dafür optimierte Prozessor 25 verwendet werden.

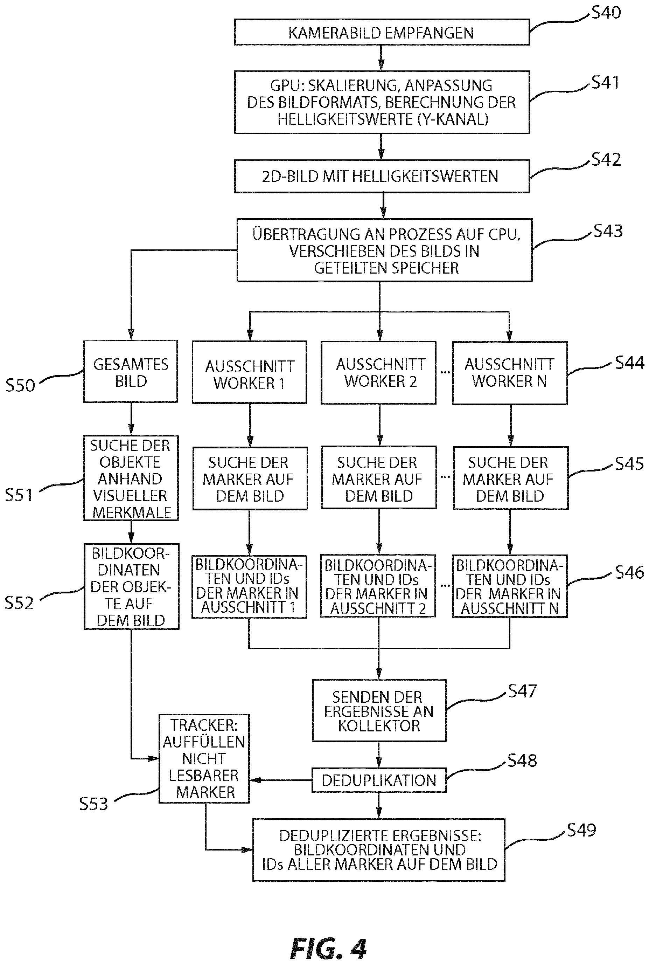

Fig. 4 zeigt ein Ablaufdiagramm zur Erklärung der parallelisierten Verarbeitung eines aufgenommenen Bilds.

In einem Schritt S40 wird zunächst das Bild des Sensors von der Rechen- und Kommunikationseinheit 20 empfangen. Falls ein Farbsensor verwendet wird, wird sodann in einem Schritt S41 zur Effizienzsteigerung das Farbbild in ein Schwarzweißbild (Y-Kanal im YUV-Format) umgewandelt. Falls kein Farbsensor verwendet wird, kann dieser Teilschritt optional sein. Zusätzlich wird das Bild in eine passende Auflösung skaliert. In einem darauffolgenden Schritt S42 wird ein resultierendes 2D-Bild mit Helligkeitswerten erhalten. Sodann wird in einem nächsten Schritt S43 das gegebenenfalls farbumgewandelte und skalierte Bild an zumindest einen Prozess auf zumindest einer CPU übertragen und in einen gemeinsamen (geteilten) Speicherbereich, d.h. einen sogenannten Shared Memory, der Rechen- und Kommunikationseinheit 20 gelegt bzw. verschoben.

Auf Schritt S43 folgend kann in diesem Ausführungsbeispiel das in Schritt S43 an zumindest einen Prozess auf zumindest einer CPU übertragene und in einen gemeinsamen (geteilten) Speicherbereich, d.h. einen sogenannten Shared Memory, der Rechen- und Kommunikationseinheit 20 gelegt bzw. verschobene Bild einer parallelen Verarbeitung in Schritten S44 bis S48 und/oder Schritten S50 bis S53 unterzogen werden. Nachstehend wird zunächst die Verarbeitung in den Schritten S44 bis S48 näher beschrieben.

In Schritt S44 wird das in den gemeinsamen Speicherbereich gelegte Bild sodann von mehreren Prozessen (die nachstehend auch als Worker bezeichnet werden) parallel bearbeitet. Hierbei ist jeder von beispielsweise Workern 1 bis N für einen Teilausschnitt des Bildes zuständig. Die Aufteilung des Bilds in mehrere Teilausschnitte wird nachstehend genauer beschrieben.

In einem nachfolgenden Schritt S45 sucht jeder der Worker 1 bis N nun nach den visuellen Markierungen. Hierfür kann beispielsweise der frei verfügbare OpenCV ArUCo Localization-Algorithmus verwendet werden (*cv::aruco::detectMarkers*). Alternativ können auch andere Bibliotheken, wie z. B. ArUCo verwendet werden. Die Rückgabewerte dieses Algorithmus sind dann in einem Schritt S46 die Ecken der Marker in (x, y)-Pixelkoordinaten auf dem Bild und die Identitäten (IDs) der gefundenen Marker. Zur Bestimmung der Identitäten kann alternativ auch ein Algorithmus zur Bildklassifikation verwendet werden.

Die von allen Workern 1 bis N erhaltenen Ergebnisse werden in sodann einem Schritt S47 an einen Kollektor gesendet und in einem Kollektorprozess gesammelt. Da in den vorangehenden Schritten mehrere der Worker 1 bis N denselben Marker 12 auffinden können, wird in einem Schritt S48 schließlich eine Deduplikation durchgeführt. Auf die Deduplikation wird nachstehend genauer Bezug genommen.

Nachstehend wird nun die Verarbeitung in den zu den Schritten S44 bis S48 parallel durchführbaren Schritten S50 bis S53 beschrieben. Insgesamt sind die Schritte S50 bis S53 dazu konfiguriert, auf dem Bild Objekte 18 anhand visueller Merkmale zu lokalisieren, und darüber hinaus dazu konfiguriert, die Lokalisierung von Objekten 18 mit nicht lesbaren Markern zu ermöglichen.

Vorzugsweise kann dazu ein Algorithmus der Objektsegmentierung verwendet werden, beispielsweise ein Algorithmus auf Grundlage eines neuronalen Netzes. Ein solches neuronales Netz ist in beispielsweise der OpenCV Bibliothek als *cv::samples::dnn::segmentation* frei verfügbar, so dass eine weitergehende Beschreibung hierin entfallen kann.

In Schritt S50 wird - im Gegensatz zu der ausschnittsweisen Verarbeitung an den Workern 1 bis N - ein gesamtes Bild herangezogen. In Schritt S51 werden, beispielsweise mittels des neuronalen Netzes nach entsprechendem Training, auf dem gesamten Bild Umrisse von Objekten 18 als Freiformkontur aller zu lokalisierender Objekte 18 bestimmt. D.h., es werden auf einem gesamten Bild Objekte 18 anhand visueller Merkmale gesucht. Die Schritte S50 bis S52 können analog zur Erkennung visueller Markierungen auch parallelisiert durchgeführt werden.

In Schritt S52 werden diese Konturen dann von einem Polygon approximiert. Hierbei wird ein Polygon mit einer definierten Anzahl an Ecken gesucht, welches die in S51 bestimmte Kontur möglichst gut approximiert. Die Zielfunktion ist hierbei die Distanz zwischen Kontur und Polygon. Hierfür sind in OpenCV Funktionen vorhanden. Somit werden die Bildkoordinaten der Objekte 18 auf dem Bild, beispielsweise zu Ecken oder dergleichen, in diesem Ausführungsbeispiel beispielsweise 4 Ecken, umgewandelt. Alternativ kann auch direkt ein Algorithmus zur Objekterkennung mit so genannten Zeichen-Boxen (bounding boxes) verwendet werden, jedoch kann dies zu Abstrichen bei der Genauigkeit führen.

Nachdem unter Verwendung der Bildkoordinaten der Objekte ein Bildausschnitt bestimmt wurde, muss noch die Korrespondenz zwischen Ecken des realen Objektes und Ecken des Polygons bestimmt werden. Dazu wird die Ausrichtung des entsprechenden Objekts bestimmt. Da das approximierte Polygon - wie ein Marker - in diesem Ausführungsbeispiel vier Ecken hat, kann hierzu ein beliebiger Algorithmus zur Bildklassifikation in 4 Klassen verwendet werden. Hierbei wird eine Klasse je möglicher Ausrichtung verwendet. Zur Klassifikation wird der Bildausschnitt auf eine vordefinierte Größe skaliert. In diesem Ausführungsbeispiel soll ein neuronales Netz als Bildklassifikator verwendet werden. Zunächst werden nun Trainingsdaten aufgenommen. Diese werden in die definierten Klassen sortiert, und der Algorithmus damit trainiert. Dies geschieht vor der produktiven Anwendung des Systems. Anschließend kann der Algorithmus verwendet werden, um die Ausrichtung des Objektes zu bestimmen. Somit erhält man die gesuchte Korrespondenz und damit Bildkoordinaten der Objektkonturen aller gesuchten Objekte auf dem Bild. Diese können nun im Folgenden analog zu Markerkonturen verwendet werden.

In einem Schritt S49 werden sodann die deduplizierten Ergebnisse als Bildkoordinaten und Identitäten aller Marker auf dem aufgenommenen Bild erhalten.

Wie vorstehend beschrieben wurde, wird das Bild parallelisiert verarbeitet, um eine geringe Systemlatenzzeit von weniger als 0,1 Sekunden zu erreichen. Zur parallelen Verarbeitung der Marker-Suche wird das Bild in N Ausschnitte aufgeteilt. Hierbei ist zu beachten, dass Marker 12 von einem Worker nur erkannt werden können, wenn sie in einem Bildausschnitt bzw. für diesen vollständig sichtbar sind.

Durch das Aufteilen in Bildausschnitte kann ein Marker 12 in zwei oder mehr Teile aufgeteilt werden. Allerdings muss ein Marker 12 in zumindest einem Bildausschnitt vollständig sichtbar sein, da dieser sonst nicht mehr erkannt wird. Dies wird durch eine Überlappung von Bildausschnitten, die der Seitenlänge eines Markers in Pixeln entspricht, in der in der jeweiligen Anwendung nächstmöglichsten Position des Markers 12 zur Kamera 21 gewährleistet.

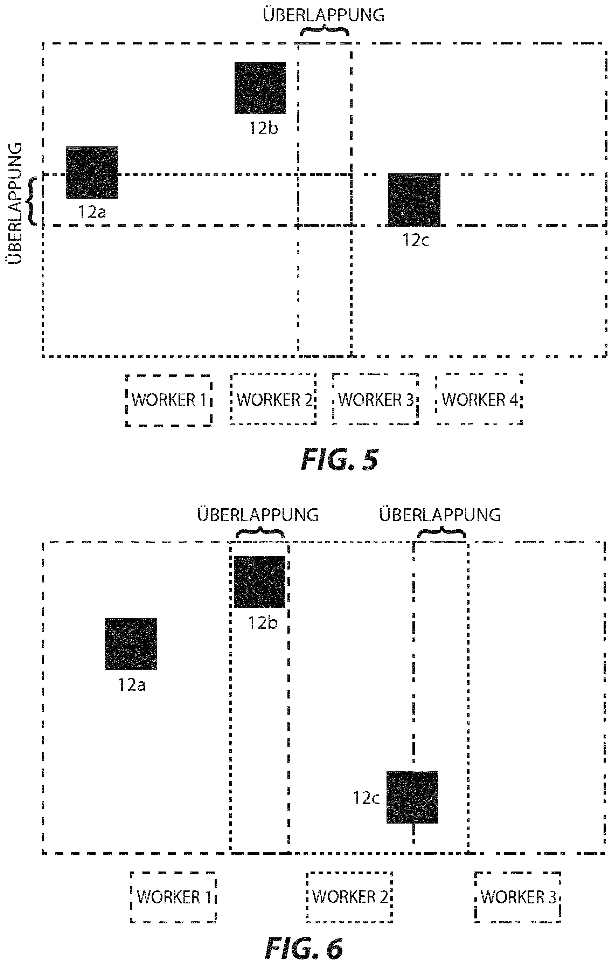

Die Figuren 5 und 6 zeigen jeweils eine schematische Darstellung zur Aufteilung eines Bilds in 4 Ausschnitte (Fig. 5) und eine schematische Darstellung zur Aufteilung des Bilds in 3 Ausschnitte (Fig. 6), als zwei mögliche Aufteilungen des Bildes in N=3 und N=4 Ausschnitte.

Zusätzlich können auch die Positionen der Marker im zuletzt analysierten Bild herangezogen werden, um Teilausschnitte hinzuzufügen. So ist in manchen Anwendungsfällen zu erwarten, dass die Position eines Objektes zwischen zwei aufeinanderfolgenden Bildern sich nicht stark verändert. Daher kann ein Ausschnitt um die letzte Position des Markers als Teilausschnitt hinzugefügt und bearbeitet werden. Dadurch kann auf eine Analyse von Bildbereichen ohne Marker verzichtet werden. Die weitere Analyse dieser Teilausschnitte gestaltet sich genau wie in den anderen Fällen.

Eine Überlappung gemäß dem vorliegenden Ausführungsbeispiel wird beispielsweise durch einen Marker 12a in Fig. 5 verdeutlicht. Wie aus Fig. 5 ersichtlich, ist dieser Marker 12a zwar von einem Worker 1 zu erkennen, nicht aber von einem Worker 2, da dieser nur einen Teil der visuellen Markierung sehen kann. Ein Marker 12b ist nur von einem Worker 1 zu erkennen, und ein Marker 12c ist von sowohl einem Worker 3 als auch von einem Worker 4 zu erkennen.

In vergleichbarer Weise ist aus Fig. 6 ersichtlich, dass der Marker 12a nur von dem Worker 1 zu erkennen ist, der Marker 12b von sowohl dem Worker 1 als auch dem Worker 2 zu erkennen ist, und der Marker 12c nur für den Worker 2, nicht aber für den Worker 3 zu erkennen ist.

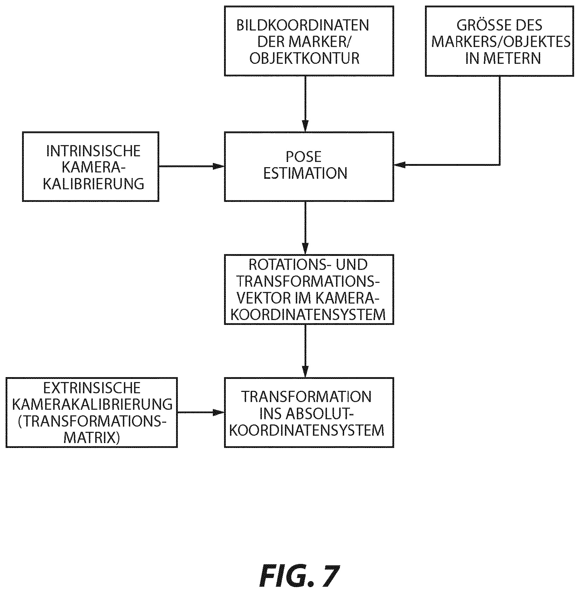

Fig. 7 zeigt im weiteren Verarbeitungsablauf ein Ablaufdiagramm zur Erklärung einer Bestimmung von Koordinaten in einem Zielsystem. Genauer stellt Fig. 7 schematisch eine Umrechnung der in Schritt S49 von Fig. 4 erhaltenen Bildkoordinaten in 3D-Absolut-Koordinaten umgerechnet dar. Der Prozess ist dabei grundlegend in zwei Teile aufgeteilt: In eine sogenannte (3D-) Pose Estimation und in eine Koordinatentransformation.

Die Pose Estimation betrifft allgemein das Problem des Bestimmens der Transformation eines Objekts in einem 2D-Bild, welche das 3D-Objekt ergibt. Die Notwendigkeit der Pose Estimation resultiert aus Beschränkungen einer merkmalsbasierten Pose Estimation in Umgebungen, in welchen es schwierig ist, Ecken oder Kanten aus einem Bild zu extrahieren. Um derartige Probleme zu umgehen, wird bei der Pose Estimation ein Objekt durch Verwendung von Freiformkonturen als Ganzes behandelt.

Die Pose Estimation benötigt zumindest folgende Eingabeparameter: Die intrinsischen Parameter der Kamerakalibrierung, die Bildkoordinaten des Markers 12 und die reale Größe des angebrachten Markers 12. Aus diesen Parametern werden sodann ein Rotations- und ein Translationsvektor im 3D-Koordinatensystem der Kamera 21 bestimmt. Die Pose Estimation ist beispielsweise in der OpenCV Bibliothek als *cv::aruco::estimatePoseSingleMarkers* frei verfügbar, so dass eine weitergehende Beschreibung hierin entfallen kann.

Die Pose Estimation der Konturen der Objekte 18, erhalten aus Schritt 52, verläuft analog. Anstatt der realen Größe des Markers wird die reale Größe des Objektes 18 verwendet.

Anschließend werden nun diese Vektoren aus dem Kamera-Koordinatensystem in das Absolut-Koordinatensystem transformiert. Hierfür ist die extrinsische Kamera-Kalibrierung in Form einer Transformationsmatrix notwendig, die nachstehend genauer beschrieben wird. Mithilfe von Verfahren aus der linearen Algebra (Koordinatentransformation) können nun die Rotations-und Translationsvektoren in das Absolut-Koordinatensystem transformiert werden. Die transformierten Vektoren beschreiben dann die Position (Translationsvektor) und Ausrichtung (Rotationsvektor) des visuellen Markers 12 bzw des Objektes 18 im Zielbereich in Absolut-Koordinaten.

Im vorgesehenen Einsatzumfeld ist davon auszugehen, dass immer wieder Marker nicht einsehbar sind - während das Objekt stabil gut erkennbar ist. Der Marker kann - wenn er einsehbar ist - aufgrund der genau definierten Form sehr genau lokalisiert werden. Erfahrungsgemäß ist die Lokalisierung des Objektes anhand visueller Merkmale weniger genau, da die Form des Objektes oftmals komplex und die Form nicht exakt definiert werden kann. Dies kann beispielsweise bei beweglichen Teilen am Objekt der Fall sein.

Um zusätzliche Robustheit und Genauigkeit zu erreichen, wird die Position und Ausrichtung der Objekte mit einem Autokorrelations-Approximations-Verfahren bestimmt. Hierfür werden zur Zuordnung der Marker zu den erkannten Objekten zusätzlich temporale Informationen verwendet. Anschließend können mithilfe der Zuordnung trotz abschnittsweiser nicht lesbarer Marker 12 die Absolutkoordinaten der Objekte 18 noch durchgehend sehr genau bestimmt werden. Zu diesem Zweck können die erkannten Objekte 18 anhand ihrer Position und Ausrichtung über mehrere Bilder hinweg verfolgt werden. Dazu wird ein Tracking-Verfahren verwendet.

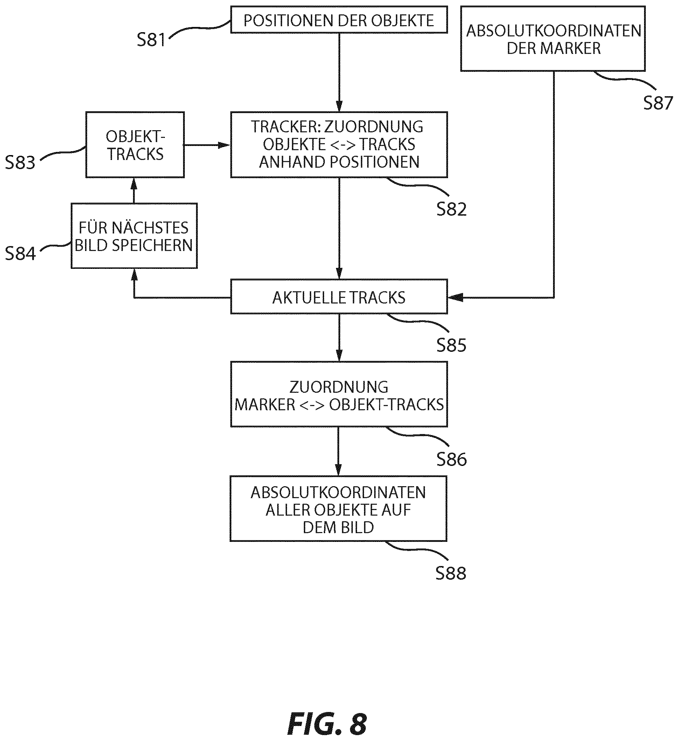

Fig. 8 zeigt schematisch einen Ablauf des Tracking-Verfahrens. Hierbei wird die zuvor bestimmte Position und Ausrichtung der visuellen Marker 12 bzw. des Objektes 18 verwendet. Es wird angemerkt, dass hierbei Absolutkoordinaten verwendet werden, und dass sich eine Position und eine Ausrichtung auf einen jeweiligen Mittelpunkt des Markers 12 bzw. des Objektes 18 beziehen kann.

Zunächst werden in einem Schritt S82 die Positionen der Objekte an einen sogenannten Verfolger bzw. Tracker übergeben.

Ein Tracker kann in der digitalen Bildverarbeitung beispielsweise dazu eingesetzt werden, punkt- und/oder linienförmige Strukturen in digitalen Bilddaten zu erfassen, oder im Bereich der virtuellen Realität dazu verwendet werden, eine Position und eine Orientierung eines Objektes zu messen. Ein bekanntes System kann zum Beispiel aus mehreren Kameras bestehen, die Marker am Objekt aufnimmt und aus der Position der Markierungen auf den Kamerabildern und der relativen Positionierung der Kameras zueinander die Position der Markierungen im Raum und damit die des Objekts berechnet. Als Marker eignen sich beispielsweise reflektierende Folien oder spezielle, auch farblich abgehobene Muster. Je einfacher die Markierungen vom Umfeld zu unterscheiden sind, umso stabiler ist der Tracker.

Der Tracker erstellt für jedes erkannte Objekt einen Track, mithilfe dessen die Spur des Objektes verfolgt werden kann. In einem Schritt S82 werden bestehende Objekttracks aus vorhergegangenen Bildanalysen mit den neu berechneten Positionen verglichen, und neu erkannte Objekte werden dem jeweils nächstgelegenen Track zugeordnet. Hierfür wird die euklidische Distanz der Positionen verwendet. Für Objekte, die keinem Track nahegelegen sind, wird ein neuer Track erstellt. Tracks, denen über mehrere Bilder hinweg kein Objekt zugeordnet wurde, werden gelöscht. Die Position der Tracks wird nach der Zuordnung mithilfe der neu erfassten Positionen der Objekte angepasst. Hierfür können auch Bewegungsgleichungen der Objekte verwendet werden. Anschließend werden die Tracks in einem Schritt S84 für das nächste Bild gespeichert. Der Tracker kann beispielsweise auf einem Kalman-Filter basieren. Dieser ist in OpenCV frei verfügbar.

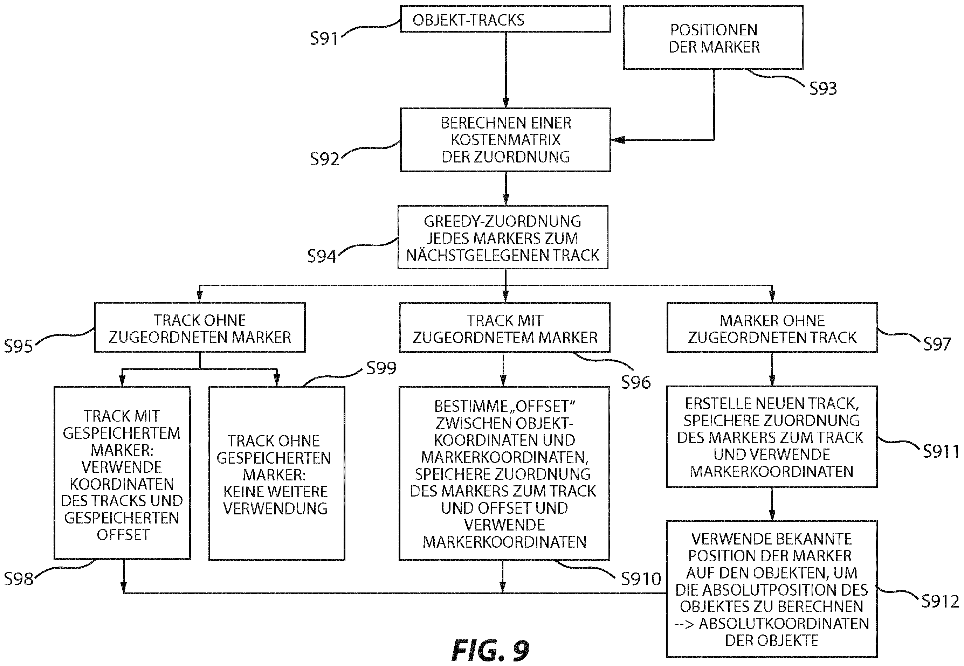

In einem Schritt S85 erhaltene aktuelle Tracks werden in einem Schritt S86 unter Verwendung von aus einem Schritt S87 erhaltenen Absolutkoordinaten der Marker 12 mit den erfassten Positionen der Marker 12 verglichen. Dies wird nachstehend unter Bezugnahme auf Fig. 9 näher beschrieben. Nach Schritt S86 sind dann in einem Schritt S88 die Positionen aller Objekte 18 auf dem Bild bestimmt.

Die Zuordnung von Markern 12 zu Objekttracks in Schritt S83 wird durchgeführt, um die Position von Objekten 18 trotz nicht durchgehend lesbaren Markern 12 genau bestimmen zu können.

Fig. 9 zeigt schematisch ein in diesem Ausführungsbeispiel verwendetes Autokorrelations-Approximations-Verfahren zur Durchführung der Zuordnung in Schritt S83.

Zunächst wird (S93) eine Kostenmatrix der Zuordnung jedes Markers (S92) zu einem Objekttrack (S91) bestimmt. Hierfür wird die euklidische Distanz zwischen den jeweiligen Positionen verwendet. Nun wird in einem Schritt S94 in einem sogenannten Greedy-Verfahren jedem Marker ein Track (S91) zugeordnet. Ein Greedy-Verfahren kann allgemein beispielsweise auf einem Greedy-Algorithmus bzw. einem "gierigen Algorithmus" basieren, d.h. einer speziellen Klasse von Algorithmen in der Informatik, die sich dadurch auszeichnen, dass sie schrittweise den Folgezustand auswählen, der zum Zeitpunkt der Wahl den größten Gewinn bzw. das beste Ergebnis (berechnet durch eine Bewertungsfunktion) verspricht. In dem hierin verwendeten Greedy-Verfahren wird für einen Marker zunächst der gemäß der Kostenmatrix nächstgelegene, noch nicht zugeordnete Track bestimmt. Ist die Entfernung kleiner als ein definierter Maximalwert, wird die Zuordnung festgelegt und der Track als zugeordnet markiert. Andernfalls wird dem Marker kein Track zugeordnet. Dieses Verfahren wird sequenziell auf alle Marker angewendet.

Nach dieser Zuordnung werden in einem Schritt S96 zunächst Tracks (S83) betrachtet, denen ein Marker 12 zugeordnet werden konnte. Hierbei ist nun sowohl die Position des Objektes 18 anhand der Objektkontur als auch die Position des Markers 12 bekannt. Somit kann in einem Schritt S910 ein Offset, d.h. die Differenz der beiden Positionen, bestimmt und gespeichert werden. Dieser Offset kann anschließend dazu verwendet werden, die Objektposition bei nicht lesbarem Marker 12 genau zu bestimmen. Die Zuordnung des Markers 12 zum Track (S83) und der Offset werden nun zur späteren Verwendung zum Track (S83) gespeichert. Falls zuvor eine Zuordnung des Markers 12 zu einem anderen Track (S83) gespeichert war, wird diese gelöscht.

Anschließend werden in einem Schritt S97 Marker 12 betrachtet, denen kein Track (S83) zugeordnet wurde. Für diese wird in einem Schritt S911 ein neuer Track erstellt und die Zuordnung analog zu Schritt S96 gespeichert. Für den Offset kann der Wert aus der realen Welt gespeichert werden.

Schließlich können Tracks (S83) vorhanden sein (S95), denen im aktuellen Bild kein Marker 12 zugeordnet wurde. Dies kann bei nicht lesbaren Markern der Fall sein. Falls zu dem Track keine Marker-Zuordnung gespeichert war (S99), wird der Track nicht weiter betrachtet. Falls eine solche Zuordnung gespeichert wurde (S98), kann die Position der Marker 12 wie folgt berechnet werden: Zur Position des Objektes 18, die anhand der Objektkontur bestimmt wurde, wird der gespeicherte Offset hinzuaddiert.

In einem Schritt S912 werden nun die Ergebnisse aus den Schritten S98, S910 und S911 zusammengeführt. In diesen Schritten wurde jeweils die Position der Marker 12 bestimmt. Die Position der Objekte kann nun mithilfe der realen Distanz der Mittelpunkte von Marker 12 und Objekt 18 bestimmt werden, da die reale Platzierung der Marker 12 auf Objekten 18 bekannt ist. Die Position des Objektes kann nun mit folgender Formel bestimmt werden (Autokorrelations-Approximations-Verfahren):

$$pos_{obj} = \begin{cases} pos_{marker} - d_{real}, & marker\ lesbar \\ pos_{obj,segmentiert} + d_{bestimmt} - d_{real}, & marker\ nicht\ lesbar \end{cases}$$

Hierbei ist $pos_{obj,segmentiert}$ die Position des Objektes berechnet basierend auf der Erkennung anhand visueller Merkmale, ist $pos_{marker}$ die Position des Markers basierend auf der Lokalisierung und ist $d_{bestimmt}$ der berechnete Offset. Dieses Verfahren erfüllt die in der Praxis wichtige Eigenschaft, dass dann, wenn der Marker nicht mehr lesbar ist, die berechnete Position des Objektes $pos_{obj}$ stetig (d.h. ohne Sprung) weiter bestimmt werden kann.

Zur robusten Bestimmung der Ausrichtung der Objekte 18 kann in Fig. 9 von Schritt S98 bis Schritt S912 analog verfahren werden. Hierbei kann genau wie bei den Positionen bevorzugt die Ausrichtung der Marker 12 in dem Absolutkoordinatensystem verwendet werden. Ebenso kann auch das Autokorrelations-Approximations-Verfahren mit Offset zwischen Ausrichtung von Objekt 18 und Marker 12 verwendet werden. Somit kann letztendlich auch bei nicht lesbarem Marker 12 die Ausrichtung des Objektes 18 stetig und in drei Dimensionen berechnet werden.

Zur Bestimmung der Identitäten der Objekte 18 werden in S912 jeweils die Identitäten der zugeordneten, gespeicherten Marker 12 verwendet. Dies ist erforderlich, da die Objekterkennung keine Identitäten bestimmen kann. Somit kann auch bei nicht durchgehend lesbaren Markern die Identität der Objekte 18 bestimmt werden.

Die bestimmten Positionen, Ausrichtungen und Identitäten der Objekte 18 werden dann (als die Daten mit einer zweiten Datenmenge, die wesentlich kleiner ist als die erste Datenmenge) zur weiteren Verwendung an den Server übertragen. Optional können auch die Koordinaten und Identitäten der Marker 12 übertragen werden. Da nun Position und Ausrichtung des Objektes 18 bekannt sind, können unter anderem auch die Positionen aller Ecken des Objektes 18 bestimmt werden.

Die vorstehend beschriebenen Schritte können sowohl unmittelbar auf der Erfassungsvorrichtung 10 als auch zu einem späteren Zeitpunkt auf dem zentralen Server 16 durchgeführt werden. Im letztgenannten Fall sendet die Erfassungsvorrichtung 10 die 2D-Bildkoordinaten der Konturen der Marker 12 und Objekte 18 an den Server 16.

Das Kamerabild kann darüber hinaus dazu verwendet werden, simultan weitere Informationen zu einem erfassten Objekt oder zu einem Erfassungsbereich zu gewinnen (beispielsweise Information betreffend einen Beladungszustand, einen Typ eines Fahrzeuges, Personen im Umfeld).

Dazu werden relevante Bildausschnitte von der Rechen- und Kommunikationseinheit 20 an den leistungsfähigeren Server 16 gesendet. Zuvor wird der Server 16 mit einigen Bildern auf eine vorliegende Problemstellung angelernt. Danach kann der Server 16 die zu gewinnenden (gewünschten) Informationen erkennen. Dieses Erkennen kann auch direkt auf der Rechen- und Kommunikationseinheit 20 durchgeführt werden. Dieser Vorgang kann auch simultan mit der Objektsegmentierung S51 durchgeführt werden.

Nachstehend werden die Benutzeroberfläche zur Kalibrierung und die für die vorstehend beschriebenen Berechnungen notwendigen intrinsischen und extrinsischen Parameter der Kamera 21 näher erläutert.

Zum Auffinden der intrinsischen Kalibrierungsparameter der Kamera 21 werden bekannte Verfahren wie z. B. solche basierend auf ChAruCo Markern verwendet. Auf diese Weise können die intrinsischen Parameter der Kamera 21 errechnet werden, die die Verzerrung des Bildes beschreiben. Die zugrundeliegenden Verfahren sind an sich gut bekannt und werden daher hierin nicht weiter beschrieben.

Die extrinsischen Kalibrierungsparameter der Kamera 21 beschreiben die Rotation und die Position der Erfassungsvorrichtung 20 im Raum. Um diese zu bestimmen, wird ein 3D-Modell des Zielbereichs verwendet, welches im Voraus interaktiv erstellt werden kann. Sodann sind in 2D und 3D korrespondierende Punkte erforderlich.

Um diese korrespondierenden Punkte zu erstellen kann a) eine Kalibrierung per "Punkt-Matching-Verfahren" bzw. Punktübereinstimmungsverfahren und/oder b) eine Positionierung eines Marker-Boards durchgeführt werden.

Für die Kalibrierung per Punkt-Matching-Verfahren nach vorstehend a) wird einem Nutzer ein 3D-Modell des Zielbereichs neben dem Kamerabild angezeigt. Auf dieser Grundlage kann der Nutzer Punkte im 3D-Modell des Zielbereichs und die jeweils korrespondierenden Punkte im Kamerabild markieren, beispielsweise unter Verwendung eines Regals oder einer Box, dessen bzw. deren sämtliche Ecken sowohl im 2D-Bild als auch am 3D-Modell markiert werden. Dadurch kann eine Liste an Punkt-Korrespondenzen erhalten werden.

Für die Positionierung eines Marker-Boards nach vorstehend b) wird ein im Voraus definiertes Marker-Board verwendet. Ein solches Marker-Board beinhaltet mehrere Marker 12 in einer definierten Anordnung, sodass von jedem Marker 12 beispielsweise die Position relativ zu einer linken oberen Ecke des Marker-Boards bekannt ist. Werden nun die Marker 12 von der Kamera 21 mit den vorstehend beschriebenen Verfahren und/oder Vorgehensweisen lokalisiert, braucht der Nutzer nur noch die Position der linken oberen Ecke des Markers im 3D-Modell zu spezifizieren. Es wird angemerkt, dass gleichwirkend jeder andere Punkt auf dem Marker-Board verwendet werden kann. Auf diese Weise können die erforderlichen 2D-3D Korrespondenzen automatisiert generiert werden.

Die auf vorstehender Grundlage gewonnenen Punkte ergeben eine Instanz des sogenannten "Perspective-n-Point"-Problems. Das Perspective-n-Point-Problem ist das Problem des Abschätzens einer Pose bzw. Stellung einer kalibrierten Kamera 21 mit einem gegebenen Satz von n realen (bzw. Modell-) 3D-Punkten und deren entsprechenden 2D-Projektionen in einem Bild. Die Kamerapose besteht beispielsweise aus 6 Freiheitsgraden, welche sich aus der Rotation (Wanken, Neigen und Gieren) und der 3D-Translation der Kamera 21 in Bezug auf die Welt zusammensetzen.

Das Perspective-n-Point-Problem wird mit einem sogenannten Solver gelöst. Hierfür kann zum Beispiel der frei verfügbare solvePnP aus OpenCV verwendet werden. Als Ergebnis wird eine Transformationsmatrix erhalten, die den extrinsischen Kalibrierungsparametern entspricht.

Wie vorstehend beschrieben wurde, beinhaltet eine Vorrichtung zur Ermittlung der Position von Objekten in einem definierten Bereich zumindest eine optische Erfassungsvorrichtung, die an einer baulichen Struktur fest montiert und dazu angeordnet ist, zumindest eine visuelle Markierung an einem zu lokalisierenden Objekt zu erfassen. Die die zumindest eine optische Erfassungsvorrichtung weist zumindest eine Kameravorrichtung und zumindest eine mit der Kameravorrichtung über eine schnelle drahtgebundene Verbindung direkt gekoppelte Rechen- und Kommunikationseinheit auf. Die Kameravorrichtung ist dazu angeordnet, zumindest ein Bild des definierten Bereichs aufzunehmen. Die optische Erfassungsvorrichtung ist dazu angeordnet, Daten des aufgenommenen Bilds mit einer ersten Datenmenge über die schnelle drahtgebundene Verbindung an die Rechen- und Kommunikationseinheit zu übertragen. Die Rechen- und Kommunikationseinheit ist dazu angeordnet, die Daten des aufgenommenen Bilds zunächst direkt zu verarbeiten und verarbeitete Daten mit einer zweiten Datenmenge, die kleiner ist als die erste Datenmenge, an eine externe Servervorrichtung zu übertragen. Ein Verfahren zur Ermittlung der Position von Objekten in einem definierten Bereich führt korrespondierende Verfahrensschritte aus.

In manchen Ausführungsbeispielen umfasst die Erfassungsvorrichtung 10/die Rechen- und Kommunikationseinheit 20 zumindest einen Prozessor oder zentrale Verarbeitungseinheit. Der Prozessor kann dazu konfiguriert sein, verschiedene Programmcodes auszuführen. Die implementierten Programmcodes können zum Beispiel Routinen zur Markierungserfassung, Bildverarbeitung, Bildskalierung, Bildtransformation, Bildaufteilung, Berechnung von Helligkeitswerten, Deduplizierung, Koordinatentransformation, für maschinelles Lernen, Bestimmung intrinsischer und/oder extrinsischer Parameter und dergleichen wie vorstehend beschrieben umfassen.

In manchen Ausführungsbeispielen umfasst die Erfassungsvorrichtung 10/die Rechen- und Kommunikationseinheit 20 einen Speicher. In manchen Ausführungsbeispielen ist der zumindest eine Prozessor an den Speicher gekoppelt. Der Speicher kann eine beliebige geeignete Speichereinrichtung sein. In manchen Ausführungsbeispielen umfasst der Speicher einen Programmcodeabschnitt zum Speichern von Programmcodes, die an dem Prozessor implementierbar sind. Ferner kann in manchen Ausführungsbeispielen der Speicher weiter einen Datenspeicherabschnitt zum Speichern von Daten, wie beispielsweise Daten, die in Übereinstimmung mit den hierin beschriebenen Ausführungsbeispielen verarbeitet worden sind oder zu verarbeiten sind, beinhalten. Der innerhalb des Programmcodeabschnitts gespeicherte implementierte Programmcode und die innerhalb des Datenspeicherabschnitts gespeicherten Daten können durch den Prozessor über die Speicher-Prozessor-Kopplung bedarfsweise abgerufen werden.

In manchen Ausführungsbeispielen kann eine Benutzerschnittstelle beinhaltet sein. Die Benutzerschnittstelle kann in manchen Ausführungsbeispielen an den Prozessor gekoppelt sein. In manchen Ausführungsbeispielen kann der Prozessor den Betriebsablauf der Benutzerschnittstelle steuern und Eingaben von der Benutzerschnittstelle empfangen. In manchen Ausführungsbeispielen kann die Benutzerschnittstelle einen Benutzer dazu befähigen, der Erfassungsvorrichtung 10/der Rechen- und Kommunikationseinheit 20 Befehle zuzuführen, zum Beispiel über eine Tastatur oder eine berührungsempfindliche Eingabefläche. In manchen Ausführungsbeispielen kann die Benutzerschnittstelle den Benutzer dazu befähigen, Information von der Erfassungsvorrichtung 10/der Rechen- und Kommunikationseinheit 20 zu erhalten. Zum Beispiel kann die Benutzerschnittstelle eine Anzeige umfassen, die dazu konfiguriert ist, dem Benutzer Information von der Erfassungsvorrichtung 10/der Rechen- und Kommunikationseinheit 20 anzuzeigen.

In manchen Ausführungsbeispielen umfasst die Erfassungsvorrichtung 10/die Rechen- und Kommunikationseinheit 20 einen Sender/Empfänger. Der Sender/Empfänger in solchen Ausführungsbeispielen kann an den Prozessor gekoppelt sein und dazu konfiguriert sein, über ein bekanntes geeignetes Kommunikationsprotokoll mit einer anderen Vorrichtung oder elektronischen Geräten zu kommunizieren, beispielsweise über ein kabelgebundenes und/oder drahtloses Kommunikationsnetzwerk.

Allgemein können die verschiedenen Ausführungsbeispiele der Erfindung in Hardware oder Spezialschaltkreisen, Software, Logik oder einer Kombination derselben implementiert sein. Zum Beispiel können manche Aspekte in Hardware implementiert sein, während andere Aspekte in Firmware oder Software, welche von einer Steuereinrichtung, einem Mikroprozessor oder einer anderweitigen Rechenvorrichtung ausgeführt werden kann, obwohl die Erfindung nicht hierauf beschränkt ist. Während verschiedene Aspekte der Erfindung als Blockdiagramme, Ablaufdiagramme oder unter Verwendung einer anderen Piktogrammdarstellung dargestellt und beschrieben sein können, versteht sich, dass diese Blockdiagramme, Ablaufdiagramme, Systeme, Techniken oder Verfahren, die hierin beschrieben wurden, als nicht beschränkende Beispiele in Hardware, Software, Firmware, Spezialschaltkreisen oder Logik, Steuereinrichtungen, anderweitigen Recheneinrichtungen oder einer geeigneten Kombination derselben implementiert sein können.

Der Speicher kann von einer beliebigen Art sein, die für die lokale technische Umgebung geeignet ist, und kann unter Verwendung jeder geeigneten Datenspeichertechnologie implementiert sein. Dazu zählen beispielsweise Halbleiter-basierte Speichereinrichtungen, magnetische Speichereinrichtungen, optische Speichereinrichtungen, verbaute Speicher und entfernbare Speicher. Die Datenprozessoren können von einer beliebigen Art sein, die für die lokale technische Umgebung geeignet ist, und können, als nicht beschränkende Beispiele, einen oder mehrere Computer, Spezialrechner, Mikroprozessoren, digitale Signalprozessoren (DSPs), anwendungsspezifische integrierte Schaltkreise (ASICs), Torschaltkreise und Prozessoren basierend auf Mehrkern-Prozessorarchitekturen beinhalten.

Die vorstehende Beschreibung stellt anhand beispielhafter und nicht beschränkender Beispiele eine vollständige und aussagekräftige Beschreibung des beispielhaften Ausführungsbeispiels der Erfindung bereit. Für den Fachmann können sich ausgehend von der vorangehenden Beschreibung in Verbindung mit den beigefügten Zeichnungen und den angefügten Ansprüchen jedoch verschiedenartige Modifikationen und Anpassungen ergeben. Es versteht sich, dass alle derartigen und gleichartigen Modifikationen der erfindungsgemäßen Lehre in den Rahmen der Erfindung wie durch die angefügten Ansprüche definiert fallen.

Wie vorstehend beschrieben wurde, beinhaltet eine Vorrichtung zur simultanen Ermittlung der Position, Ausrichtung, Identität und ausgewählter Zustandsinformationen von Objekten in einem definierten Bereich sowie zur robusten, dreidimensionalen Echtzeitlokalisierung von Objekten in dem Bereich beinhaltet zumindest eine optische Erfassungsvorrichtung mit zumindest einer Kameravorrichtung und zumindest einer mit dieser direkt gekoppelten Rechen- und Kommunikationseinheit. Die optische Erfassungsvorrichtung ist fest montiert und erfasst visuell zumindest ein zu lokalisierendes Objekt. Die Rechen- und Kommunikationseinheit berechnet auf der Grundlage sowohl nur einer am Objekt angebrachten visuellen Markierung als auch angelernter visueller Merkmale des gesamten Objekts die absolute Position, die Ausrichtung und ausgewählte Zustandsinformationen jedes zu lokalisierenden Objekts. Die Kameravorrichtung nimmt zumindest ein Bild des definierten Bereichs auf. Ein Tracking von Objekten und ein Autokorrelations-Approximations-Verfahren zur Durchführung einer Zuordnung von Markern zu Objekttracks ermöglicht, die Position von Objekten auch bei nicht durchgehend lesbaren Markern genau zu bestimmen. Die optische Erfassungsvorrichtung überträgt Daten des aufgenommenen Bilds mit einer ersten Datenmenge über die schnelle drahtgebundene Verbindung an die Rechen- und Kommunikationseinheit, und die Rechen- und Kommunikationseinheit verarbeitet die Daten des aufgenommenen Bilds zunächst direkt und überträgt verarbeitete Daten mit einer zweiten Datenmenge, die wesentlich kleiner ist als die erste Datenmenge, an eine externe Servervorrichtung.

Insbesondere vorteilhaft benötigen die vorstehend beschriebene Vorrichtung und das vorstehend beschriebene Verfahren - im Gegensatz zu bekannten Anordnungen, die entweder mehrere Kameras oder mehrere Marker an einem Objekt benötigen, um dieses dreidimensional zu verfolgen bzw. zu tracken - nur (genau) eine Kamera und (genau) eine visuelle Markierung (oder Objektsegmentierung), um eine 3D-Position und eine zugehörige Ausrichtung zu berechnen.

**Patentansprüche**

1.  Vorrichtung zur Ermittlung der Position, Ausrichtung, Identität und ausgewählter Zustandsinformationen von Objekten in einem definierten Bereich, mit zumindest nur einer optischen Erfassungsvorrichtung, die an einer baulichen Struktur fest montiert und dazu angeordnet ist, zumindest ein zu lokalisierendes Objekt visuell zu erfassen, wobei

    die zumindest eine optische Erfassungsvorrichtung zumindest eine Kameravorrichtung und zumindest eine mit der Kameravorrichtung über eine drahtgebundene Verbindung direkt gekoppelte Rechen- und Kommunikationseinheit aufweist, die dazu angeordnet ist, auf der Grundlage sowohl nur einer am Objekt angebrachten visuellen Markierung als auch basierend auf einer Objektsegmentierung angelernter visueller Merkmale des gesamten Objekts mit anschließender Bestimmung charakteristischer Punkte des Objekts, mit einer tracking-basierten Zuordnung von visuellen Markierungen zu erkannten Objekten auf Grundlage einer Autokorrelation die absolute Position, Ausrichtung, ausgewählte Zustandsinformationen und Identität jedes zu lokalisierenden Objekts zu berechnen; und
    die Kameravorrichtung dazu angeordnet ist, zumindest ein Bild des definierten Bereichs aufzunehmen, die optische Erfassungsvorrichtung dazu angeordnet ist, Daten des aufgenommenen Bilds mit einer ersten Datenmenge über die drahtgebundene Verbindung an die Rechen- und Kommunikationseinheit zu übertragen, und
    die Rechen- und Kommunikationseinheit dazu angeordnet ist, die Daten des aufgenommenen Bilds zunächst direkt zu verarbeiten und verarbeitete Daten mit einer zweiten Datenmenge, die kleiner ist als die erste Datenmenge, an eine externe Servervorrichtung zu übertragen, **dadurch gekennzeichnet, dass** H
    die Rechen- und Kommunikationseinheit dazu angeordnet ist,
    das von der Kameravorrichtung aufgenommene Bild zu empfangen, das Bild in eine passende Auflösung zu skalieren, ein 2D-Bild mit Helligkeitswerten zu erzeugen und das erzeugte 2D-Bild an zumindest einen Prozess auf zumindest einer CPU zu übertragen und in einen gemeinsamen Speicherbereich der Rechen- und Kommunikationseinheit zu verschieben;
    das in den gemeinsamen Speicherbereich verschobene 2D-Bild in eine Mehrzahl von N Teilausschnitten (N ≥ 2) aufzuteilen, jedem Teilausschnitt einen dedizierten Prozess zuzuweisen und die Teilausschnitte mittels der zugewiesenen Prozesse parallel zu bearbeiten;
    von den zugewiesenen Prozessen erhaltene Ergebnisse mittels eines Kollektorprozesses zu sammeln, eine Deduplikation mehrfach erfasster visueller Markierungen durchzuführen und deduplizierte Resultate als Bildkoordinaten und Identitäten aller visuellen Markierungen zu erhalten;
    die Bildkoordinaten mittels eines Prozesses zur Pose Estimation auf der Grundlage von zumindest intrinsischen Parametern der Kamerakalibrierung, der Bildkoordinaten der visuellen Markierung und einer realen Größe der visuellen Markierung als Eingabeparameter und einer vorbestimmten Koordinatentransformation in 3D-Absolutkoordinaten umzurechnen und einen Rotationsvektor und einen Translationsvektor in einem 3D-Koordinatensystem der Kameravorrichtung zu bestimmen, und den Rotationsvektor und den Translationsvektor mittels einer extrinsischen Kamera-Kalibrierung in Form einer Transformationsmatrix in ein Absolut-Koordinatensystem zu transformieren; und
    deduplizierte und stetige Resultate in Form von Position, Ausrichtung und Identität aller zu lokalisierenden Objekte auf der Grundlage einer Zuordnung erfasster visueller Markierungen zu Tracks von erfassten Objekten, die durch ein Tracking-Verfahren über mehrere Bilder hinweg erstellt werden, durch berechnen von Positionen von Objekten, für die keine visuelle Markierung lesbar war, unter Verwendung eines Autokorrelations-Approximations-Verfahrens zu erhalten.

2. Vorrichtung nach Anspruch 1, bei der die Erfassungsvorrichtung dazu angeordnet ist, mittels der Kameravorrichtung das zumindest eine zu lokalisierende Objekt in einem für sie sichtbaren Bereich zu erfassen und mittels der Rechen- und Kommunikationseinheit die absolute Position, Ausrichtung und Identität des zumindest einen zu lokalisierenden Objekts zu berechnen.

3. Vorrichtung nach Anspruch 1 oder 2, bei der die Erfassungsvorrichtung dazu angeordnet ist, mittels der Kameravorrichtung simultan ein Bild eines für sie sichtbaren Bereiches zu erfassen, mittels der Rechen- und Kommunikationseinheit in dem erfassten Bild zumindest ein Objekt auf der Grundlage der angelernten visuellen Merkmale zu erfassen und die absolute Position, Ausrichtung und Identität des zumindest einen Objekts zu berechnen.

4. Vorrichtung nach Anspruch 3, bei der die Rechen- und Kommunikationseinheit zumindest einen besonders für die Verarbeitung neuronaler Netzwerke optimierten (Co-)Prozessor aufweist.

5. Vorrichtung nach einem der vorangehenden Ansprüche, die dazu angeordnet ist, für die simultane Ermittlung der Position von Objekten in Echtzeit Latenzzeiten von weniger als 0,1 Sekunden aufzuweisen, und sowohl die Position als auch eine Ausrichtung und ausgewählte Zustandsinformationen von Objekten in drei Dimensionen zu bestimmen.

6. Vorrichtung nach einem der vorangehenden Ansprüche, bei der die Rechen- und Kommunikationseinheit dazu angeordnet ist, Kalibrierungsdaten zu empfangen, Positionen von zu lokalisierenden Objekten und daran angebrachten visuellen Markierungen in dem aufgenommenen Bild zu berechnen und die berechneten Positionen in absolute Koordinaten der Objekte umzurechnen.

7. Vorrichtung nach Anspruch 1, bei der extrinsische Kalibrierungsparameter, die eine Rotation und die Position der Erfassungsvorrichtung im Raum beschreiben, mittels eines im Voraus erstellten 3D-Modells eines Zielbereichs mit in 2D und 3D jeweils korrespondierenden Punkten bestimmt werden.

8. Vorrichtung nach Anspruch 1, bei der extrinsische Kalibrierungsparameter, die eine Rotation und die Position der Erfassungsvorrichtung im Raum beschreiben, mittels eines im Voraus erstellten 3D-Modells eines Zielbereichs und eines Marker-Boards bestimmt werden.

9. Vorrichtung nach Anspruch 1, bei der die Rechen- und Kommunikationseinheit dazu angeordnet ist, die Identität von Markern durch einen lernbasierten Algorithmus zu bestimmen, welcher mit beispielhaften Bildern von Markern angelernt wird.

10. Vorrichtung nach Anspruch 1, bei der die Rechen- und Kommunikationseinheit dazu angeordnet ist, eine simultane Bestimmung der Position, Ausrichtung und ausgewählter Zustandsinformationen von komplexen Objekten zu bestimmen.

11. Verfahren zur Ermittlung der Position von Objekten in einem definierten Bereich, mit den Schritten:

Visuelles Erfassen eines zu lokalisierenden Objektes mit zumindest einer optischen Erfassungsvorrichtung, die an einer baulichen Struktur fest montiert ist, wobei die zumindest eine optische Erfassungsvorrichtung zumindest eine Kameravorrichtung und zumindest eine mit der Kameravorrichtung über eine drahtgebundene Verbindung direkt gekoppelte Rechen- und Kommunikationseinheit aufweist;
Aufnehmen zumindest eines Bilds des definierten Bereichs mittels der Kameravorrichtung; Übertragen von Daten des aufgenommenen Bilds mittels der optischen Erfassungsvorrichtung mit einer ersten Datenmenge über die drahtgebundene Verbindung an die Rechen- und Kommunikationseinheit; und
zunächst direktes Verarbeiten der Daten des aufgenommenen Bilds mittels der Rechen- und Kommunikationseinheit, wobei die Rechen- und Kommunikationseinheit eine absolute Position, eine Ausrichtung, ausgewählte Zustandsinformationen und eine Identität jedes zu lokalisierenden Objekts auf der Grundlage sowohl einer am Objekt angebrachten visuellen Markierung als auch angelernter visueller Merkmale des gesamten Objekts mit anschließender Bestimmung charakteristischer Punkte des Objekts mit einer tracking-basierten Zuordnung von visuellen Markierungen zu erkannten Objekten auf Grundlage einer Autokorrelation berechnet, und sodann Übertragen der verarbeiteten Daten mit einer zweiten Datenmenge, die kleiner ist als die erste Datenmenge, an eine externe Servervorrichtung,

**EP 3 543 901 B1**

**dadurch gekennzeichnet, dass**

von der Rechen- und Kommunikationseinheit

das von der Kameravorrichtung aufgenommene Bild empfangen wird, das Bild in eine passende Auflösung skaliert wird, ein 2D-Bild mit Helligkeitswerten erzeugt und das erzeugte 2D-Bild an zumindest einen Prozess auf zumindest einer CPU übertragen wird und in einen gemeinsamen Speicherbereich der Rechen- und Kommunikationseinheit verschoben wird;

das in den gemeinsamen Speicherbereich verschobene 2D-Bild in eine Mehrzahl von N Teilausschnitten (N ≥ 2) aufgeteilt wird, jedem Teilausschnitt ein dedizierter Prozess zugewiesen wird und die Teilausschnitte mittels der zugewiesenen Prozesse parallel bearbeitet werden;

von den zugewiesenen Prozessen erhaltene Ergebnisse mittels eines Kollektorprozesses gesammelt werden, eine Deduplikation mehrfach erfasster visueller Markierungen durchgeführt wird und deduplizierte Resultate als Bildkoordinaten und Identitäten aller visuellen Markierungen erhalten werden;

die Bildkoordinaten mittels eines Prozesses zur Pose Estimation auf der Grundlage von zumindest intrinsischen Parametern der Kamerakalibrierung, der Bildkoordinaten der visuellen Markierung und einer realen Größe der visuellen Markierung als Eingabeparameter und einer vorbestimmten Koordinatentransformation in 3D-Absolutkoordinaten umgerechnet werden und ein Rotationsvektor und ein Translationsvektor in einem 3D-Koordinatensystem der Kameravorrichtung bestimmt werden, und der Rotationsvektor und der Translationsvektor mittels einer extrinsischen Kamera-Kalibrierung in Form einer Transformationsmatrix in ein Absolut-Koordinatensystem transformiert wird; und

deduplizierte und stetige Resultate in Form von Position, Ausrichtung und Identität aller zu lokalisierenden Objekte auf der Grundlage einer Zuordnung erfasster visueller Markierungen zu Tracks von erfassten Objekten, die durch einen Tracking-Verfahren über mehrere Bilder hinweg erstellt werden, durch Berechnen von Positionen von Objekten, für die keine visuelle Markierung lesbar war, unter Verwendung eines Autokorrelations-Approximations-Verfahrens erhalten werden.

**Claims**

1. A device for determining the position, orientation, identity and selected status information of objects in a defined area, comprising:

   at least only one optical detection device which is permanently mounted on a building structure and is arranged to visually detect at least one object to be localized, wherein

   the at least one optical detection device has at least one camera device and at least one computing and communication unit which is directly coupled to the camera device via a wired connection, which is arranged to calculate the absolute position, orientation, selected status information and identity of each object to be localized on the basis of only one visual marker attached to the object as well as on the basis of an object segmentation of learned visual features of the entire object with subsequent determination of characteristic points of the object, with a tracking-based assignment of visual markers to recognized objects on the basis of an autocorrelation; and

   the camera device is arranged to capture at least one image of the defined area, the optical capture device is arranged to transmit data of the captured image with a first amount of data to the computing and communication unit via the wired connection, and the computing and communication unit is arranged to first directly process the data of the captured image and to transmit processed data with a second amount of data, which is smaller than the first amount of data, to an external server device,
   **characterized in that**

   the computing and communication unit is arranged:

   to receive the image captured by the camera device, to scale the image to a suitable resolution, to generate a 2D image with brightness values and to transfer the generated 2D image to at least one process on at least one CPU and to move it to a common memory area of the computing and communication unit;

   to divide the 2D image moved to the common memory area into a plurality of N image sections (N>=2), assigning a dedicated process to each image section and processing the image sections in parallel by means of the assigned processes;

   to collect results obtained from the assigned processes by means of a collector process, performing a deduplication of multiple captured visual markers and obtaining deduplicated results as image coordinates and identities of all visual markers;

17

to convert the image coordinates into 3D absolute coordinates using a pose estimation process based on at least intrinsic parameters of the camera calibration, the image coordinates of the visual marker and a real size of the visual marker as input parameters and a predetermined coordinate transformation, and to determine a rotation vector and a translation vector in a 3D coordinate system of the camera device, and to transform the rotation vector and the translation vector into an absolute coordinate system by means of an extrinsic camera calibration in the form of a transformation matrix; and

to obtain deduplicated and continuous results in the form of position, orientation and identity of all objects to be localized based on a mapping of detected visual markers to tracks of detected objects created by a tracking process across multiple images by calculating positions of objects for which no visual marker was readable using an autocorrelation-approximation-procedure

2. The device according to claim 1, wherein the detection device is arranged to detect the at least one object to be localized in an area visible to it by means of the camera device and to calculate the absolute position, orientation and identity of the at least one object to be localized by means of the computing and communication unit.

3. The device according to claim 1 or 2, wherein the detection device is arranged to simultaneously capture an image of an area visible to it by means of the camera device, to detect at least one object in the captured image on the basis of the learned visual features by means of the computing and communication unit, and to calculate the absolute position, orientation and identity of the at least one object.

4. The device according to claim 3, wherein the computing and communication unit has at least one (co-)processor specially optimized for processing neural networks.

5. The device according to one of the preceding claims, further arranged to have latency times of less than 0.1 seconds for the simultaneous determination of the position of objects in real time, and to determine both the position and an orientation and selected state information of objects in three dimensions.

6. The device according to one of the preceding claims, wherein the calculation and communication unit is arranged to receive calibration data, to calculate positions of objects to be localized and visual markers attached to these objects in the recorded image and to convert the calculated positions into absolute coordinates of the objects.

7. The device according to claim 1, wherein extrinsic calibration parameters describing a rotation and the position of the detection device in space are determined by means of a 3D model of a target area, created in advance, using corresponding points in 2D and 3D.

8. The device according to claim 1, wherein extrinsic calibration parameters describing a rotation and the position of the detection device in space are determined by means of a previously created 3D model of a target area and a marker board.

9. The device according to claim 1, wherein the computing and communication unit is arranged to determine the identity of markers by means of a learning-based algorithm which is taught using exemplary images of markers.

10. The device according to claim 1, wherein the computing and communication unit is arranged to determine a simultaneous determination of the position, orientation and selected status information of complex objects.

11. A Method for determining the position of objects in a defined area, comprising the steps of:

visual detection of an object to be localized with at least one optical detection device which is fixedly mounted to a building structure, with the at least one optical detection device having at least one camera device and at least one computing and communication unit directly coupled to the camera device via a wired connection;

capturing at least one image of the defined area by means of the camera device;

transmitting data of the captured image by means of the optical detection device with a first amount of data to the computing and communication unit via the wired connection; and

first directly processing the data of the captured image by means of the computing and communication unit, wherein the computing and communication unit calculates an absolute position, an orientation, selected state information and an identity of each object to be localized on the basis of both a visual marker attached to the object and learned visual features of the entire object with subsequent determination of characteristic points of the object with a tracking-based assignment of visual markers to recognized objects on the basis of an autocorrelation, and then transmitting the processed data with a second amount of data, which is smaller than the first amount of data, to an external server device,

**characterized in that**,

by the computing and communication unit,

the image captured by the camera device is received, the image is scaled to a suitable resolution, a 2D image with brightness values is created and the created 2D image is transmitted to at least one process on at least one CPU and moved to a common memory area of the computing and communication unit,

the 2D image shifted into the common memory area is divided into a plurality of N image sections (N $\geq$ 2), a dedicated process is assigned to each image section and the image sections are processed in parallel by means of the assigned processes;

results obtained from the assigned processes are collected by means of a collector process, deduplication of multiple captured visual markers is performed and deduplicated results are obtained as image coordinates and identities of all visual markers;

the image coordinates are converted into 3D absolute coordinates by means of a pose estimation process based on at least intrinsic parameters of the camera calibration, the image coordinates of the visual marker and a real size of the visual marker as input parameters and a predetermined coordinate transformation, and a rotation vector and a translation vector are determined in a 3D coordinate system of the camera device, and the rotation vector and the translation vector are transformed into an absolute coordinate system by means of an extrinsic camera calibration in the form of a transformation matrix; and

deduplicated and continuous results in the form of position, orientation and identity of all objects to be localized are obtained on the basis of a mapping of detected visual markers to tracks of detected objects created by a tracking process over multiple images by calculating positions of objects for which no visual marker was readable using an autocorrelation-approximation-procedure.

**Revendications**

1. . Dispositif pour déterminer la position, l'orientation, l'identité et des informations d'état sélectionnées d'objets dans une zone définie, comprenant:

au moins un seul dispositif de détection optique qui est monté de manière fixe sur une structure de construction et qui est agencé pour détecter visuellement au moins un objet à localiser, dans lequel

le au moins un dispositif de détection optique comprend au moins un dispositif de caméra et au moins une unité de calcul et de communication couplée directement au dispositif de caméra par une liaison filaire, qui est agencée pour calculer la position absolue, l'orientation, des informations d'état sélectionnées et l'identité de chaque objet à localiser sur la base aussi bien d'un seul repère visuel appliqué à l'objet que sur la base d'une segmentation d'objet de caractéristiques visuelles apprises de l'ensemble de l'objet avec détermination subséquente de points caractéristiques de l'objet, avec une association basée sur le suivi de repères visuels à des objets reconnus sur la base d'une autocorrélation; et 1

le dispositif de caméra est agencé pour prendre au moins une image de la zone définie, le dispositif de détection optique est agencé pour transmettre des données de l'image prise avec une première quantité de données à l'unité de calcul et de communication par l'intermédiaire de la connexion filaire, et l'unité de calcul et de communication est agencée pour traiter d'abord directement les données de l'image prise et pour transmettre des données traitées avec une deuxième quantité de données, qui est inférieure à la première quantité de données, à un dispositif de serveur externe,

**caractérisé en ce que**

l'unité de calcul et de communication est agencée pour:

recevoir l'image capturée par le dispositif de caméra, mettre à l'échelle l'image à une résolution appropriée, générer une image 2D avec des valeurs de luminosité et transmettre l'image 2D générée à au moins un processus sur au moins une unité centrale et la déplacer vers une zone de mémoire commune de l'unité de calcul et de communication;

diviser l'image 2D déplacée dans la zone de mémoire commune en une pluralité de N sous-sections (N$\geq$ 2), attribuer un processus dédié à chaque sous-section et traiter les sous-sections en parallèle au moyen des processus attribués;

collecter les résultats obtenus par les processus assignés au moyen d'un processus collecteur, effectuer une déduplication des marqueurs visuels capturés plusieurs fois et obtenir des résultats dédupliqués sous forme de coordonnées d'image et d'identités de tous les marqueurs visuels;

convertir les coordonnées d'image en coordonnées 3D absolues au moyen d'un processus d'estimation de pose basé au moins sur des paramètres intrinsèques de l'étalonnage de la caméra, les coordonnées d'image du marqueur visuel et une taille réelle du marqueur visuel comme paramètres d'entrée, et une transformation de coordonnées prédéterminée, et déterminer un vecteur de rotation et un vecteur de translation dans un système de coordonnées 3D du dispositif de caméra, et à transformer le vecteur de rotation et le vecteur de translation en un système de coordonnées absolues au moyen d'un étalonnage extrinsèque de la caméra sous la forme d'une matrice de transformation; et

obtenir des résultats dédupliqués et continus sous la forme de la position, de l'orientation et de l'identité de tous les objets à localiser, sur la base d'une association entre des repères visuels détectés et des pistes d'objets détectés créées par un procédé de suivi sur plusieurs images, en calculant les positions des objets pour lesquels aucun repère visuel n'était lisible, en utilisant un procédé d'approximation autocorrélation.

2. . Dispositif selon la revendication 1, dans lequel le dispositif de détection est agencé pour détecter, au moyen du dispositif de caméra, le au moins un objet à localiser dans une zone visible pour lui et pour calculer, au moyen de l'unité de calcul et de communication, la position absolue, l'orientation et l'identité du au moins un objet à localiser.

3. . Dispositif selon la revendication 1 ou 2, dans lequel le dispositif de détection est agencé pour détecter simultanément, au moyen du dispositif de caméra, une image d'une zone visible pour lui, pour détecter, au moyen de l'unité de calcul et de communication, au moins un objet dans l'image détectée sur la base des caractéristiques visuelles apprises, et pour calculer la position absolue, l'orientation et l'identité dudit au moins un objet.

4. . Dispositif selon la revendication 3, dans lequel l'unité de calcul et de communication comprend au moins un (co)processeur particulièrement optimisé pour le traitement des réseaux neuronaux.

5. . Dispositif selon une des revendications précédentes, agencé pour avoir des temps de latence inférieurs à 0,1 seconde pour la détermination simultanée de la position d'objets en temps réel, et pour déterminer à la fois la position, une orientation et des informations d'état sélectionnées d'objets en trois dimensions.

6. . dispositif selon une des revendications précédentes, dans lequel l'unité de calcul et de communication est agencée pour recevoir des données d'étalonnage, calculer des positions d'objets à localiser et de repères visuels qui leur sont attachés dans l'image capturée, et convertir les positions calculées en coordonnées absolues des objets.

7. : Dispositif selon la revendication 1, dans lequel des paramètres de calibrage extrinsèques décrivant une rotation et la position du dispositif de détection dans l'espace sont déterminés au moyen d'un modèle 3D préétabli d'une zone cible avec des points correspondants en 2D et 3D respectivement.

8. . Dispositif selon la revendication 1, dans lequel des paramètres de calibrage extrinsèques décrivant une rotation et la position du dispositif de détection dans l'espace sont déterminés au moyen d'un modèle 3D préétabli d'une zone cible et d'une carte de marqueurs.

9. . Dispositif selon la revendication 1, dans lequel l'unité de calcul et de communication est agencée pour déterminer l'identité de marqueurs au moyen d'un algorithme basé sur l'apprentissage, qui est appris avec des images exemplaires de marqueurs.

10. . Dispositif selon la revendication 1, dans lequel l'unité de calcul et de communication est agencée pour déterminer une détermination simultanée de la position, de l'orientation et d'informations d'état sélectionnées d'objets complexes.

11. . Procédé pour déterminer la position d'objets dans une zone définie, comprenant les étapes suivantes:

détection visuelle d'un objet à localiser avec au moins un dispositif de détection optique qui est monté de manière fixe sur une structure de construction, le au moins un dispositif de détection optique présentant au moins un dispositif de caméra et au moins une unité de calcul et de communication couplée directement au dispositif de caméra par une liaison filaire;

la prise d'au moins une image de la zone définie au moyen du dispositif de caméra;

la transmission de données de l'image prise au moyen du dispositif d'acquisition optique avec une première quantité de données à l'unité de calcul et de communication via la liaison filaire; et

traiter directement, dans un premier temps, les données de l'image capturée au moyen de l'unité de calcul et de communication, l'unité de calcul et de communication fournissant une position absolue, une orientation, des informations d'état sélectionnées et une identité de chaque objet à localiser sur la base à la fois d'un marqueur visuel fixé à l'objet et de caractéristiques visuelles apprises de l'objet entier, avec détermination ultérieure de points caractéristiques de l'objet avec une association basée sur le suivi de marqueurs visuels à des objets reconnus sur la base d'une autocorrélation, et ensuite transmission des données traitées avec une deuxième quantité de données, qui est inférieure à la première quantité de données, à un dispositif de serveur externe, **caractérisé en ce que** l'unité de calcul et de communication :

reçoit l'image capturée par le dispositif de caméra, met l'image à l'échelle à une résolution appropriée, génère une image 2D avec des valeurs de luminosité et transmet l'image 2D générée à au moins un processus sur au moins une unité centrale et la déplace vers une zone de mémoire commune de l'unité de calcul et de communication ;

l'image 2D déplacée dans la zone de mémoire commune est divisée en une pluralité de N sous-sections (N≥ 2), un processus dédié est attribué à chaque sous-section et les sous-sections sont traitées en parallèle au moyen des processus attribués ;

les résultats obtenus par les processus assignés sont collectés au moyen d'un processus collecteur, une déduplication des marqueurs visuels capturés plusieurs fois est effectuée et les résultats dédupliqués sont obtenus en tant que coordonnées d'image et identités de tous les marqueurs visuels ;

les coordonnées d'image sont converties en coordonnées 3D absolues au moyen d'un processus d'estimation de pose basé au moins sur des paramètres intrinsèques de l'étalonnage de la caméra, les coordonnées d'image du marqueur visuel et une taille réelle du marqueur visuel en tant que paramètres d'entrée, et une transformation de coordonnées prédéterminée, et un vecteur de rotation et un vecteur de translation sont déterminés dans un système de coordonnées 3D du dispositif de caméra, et le vecteur de rotation et le vecteur de translation sont transformés en un système de coordonnées absolues au moyen d'un étalonnage extrinsèque de la caméra sous la forme d'une matrice de transformation ; et

des résultats dédupliqués et continus sont obtenus sous la forme de la position, de l'orientation et de l'identité de tous les objets à localiser, sur la base d'une association de repères visuels détectés avec des pistes d'objets détectés créées par un procédé de suivi sur plusieurs images, en calculant les positions d'objets pour lesquels aucun repère visuel n'était lisible, en utilisant un procédé d'approximation autocorrélation.

**FIG. 1**

**FIG. 2**

BILDAUFNAHME
DURCH KAMERA

S30

KALIBRIERUNGSDATEN

BERECHNUNG DER
OBJEKTPOSITION
IN DER RECHEN- UND
KOMMUNIKATIONS-
EINHEIT

S32

BERECHNUNG DER
ABSOLUTKOORDINATEN
DES OBJEKTS

S34

ÜBERTRAGUNG DER
KOORDINATEN
AN SERVER

S36

# FIG. 3

**FIG. 4**

**FIG. 5**

**FIG. 6**

**FIG. 7**

POSITIONEN DER OBJEKTE

S81

ABSOLUTKOORDINATEN
DER MARKER

S87

OBJEKT-
TRACKS

S83

TRACKER: ZUORDNUNG
OBJEKTE <-> TRACKS
ANHAND POSITIONEN

S82

FÜR NÄCHSTES
BILD SPEICHERN

S84

AKTUELLE TRACKS

S85

ZUORDNUNG
MARKER <-> OBJEKT-TRACKS

S86

ABSOLUTKOORDINATEN
ALLER OBJEKTE AUF
DEM BILD

S88

**FIG. 8**

```
        ┌─────────────────────────┐        ┌─────────────────────┐
S91 ────│      OBJEKT-TRACKS      │        │      POSITIONEN     │
        └─────────────────────────┘        │      DER MARKER     │
                    │                       └─────────────────────┘
                    │                                 │  S93
                    ▼                                 │
        ┌─────────────────────────┐                   │
        │     BERECHNEN EINER     │◄──────────────────┘
S92 ────│      KOSTENMATRIX       │
        │      DER ZUORDNUNG      │
        └─────────────────────────┘
                    │
                    ▼
        ┌─────────────────────────┐
        │    GREEDY-ZUORDNUNG     │
S94 ────│   JEDES MARKERS ZUM     │
        │  NÄCHSTGELEGENEN TRACK  │
        └─────────────────────────┘
```

|                        |                         |                       |
|------------------------|-------------------------|-----------------------|
| S95 — TRACK OHNE ZUGEORDNETEN MARKER | TRACK MIT ZUGEORDNETEM MARKER — S96 | MARKER OHNE ZUGEORDNETEN TRACK — S97 |

|  |  |  |  |
|--|--|--|--|
| S98 — TRACK MIT GESPEICHERTEM MARKER: VERWENDE KOORDINATEN DES TRACKS UND GESPEICHERTEN OFFSET | S99 — TRACK OHNE GESPEICHERTEN MARKER: KEINE WEITERE VERWENDUNG | S910 — BESTIMME „OFFSET" ZWISCHEN OBJEKT-KOORDINATEN UND MARKERKOORDINATEN, SPEICHERE ZUORDNUNG DES MARKERS ZUM TRACK UND OFFSET UND VERWENDE MARKERKOORDINATEN | S911 — ERSTELLE NEUEN TRACK, SPEICHERE ZUORDNUNG DES MARKERS ZUM TRACK UND VERWENDE MARKERKOORDINATEN |

```
                                                    ┌──────────────────────┐
                                                    │  VERWENDE BEKANNTE   │
                                                    │ POSITION DER MARKER  │
                                                    │  AUF DEN OBJEKTEN, UM│
                                                    │ DIE ABSOLUTPOSITION  │──── S912
                                                    │    DES OBJEKTES ZU   │
                                                    │     BERECHNEN        │
                                                    │ --> ABSOLUTKOORDINATEN│
                                                    │    DER OBJEKTE       │
                                                    └──────────────────────┘
```

*FIG. 9*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015179668 A1

- JP 6102930 B

**In der Beschreibung aufgeführte Nicht-Patentliteratur**

- **AMOS R OMONDI et al.** *FPGA Implementations of Neural Networks,* 31. Dezember 2006
- Accelerating Binarized Neural Networks: Comparison of FPGA, CPU, GPUn and ASIC. **NURVITADHI ERIKO et al.** 2016 INTERNATIONAL CONFERENCE ON FIELD PROGRAMMABLE TECHNOLOGY (FPT). IEEE, 07. Dezember 2016, 77-84
- **YAO LU et al.** Optasia: A Relational Platform for Efficient Large-Scale Video Analytics. *PROCEEDINGS OF THE SEVENTH ACM SYMPOSIUM ON CLOUD COMPUTING; SOCC'16,* 01. Januar 2016, 57-70
- **JOHANNES PLAPP.** *The OC1 Algorithm On Classification, Decision Trees and Randomized Search of Oblique Linear Splits,* 13. August 2014, 1-60
- Associative Deep Clustering: Training a Classification Network With No Labels. **HAEUSSER PHILIP et al.** ROBOCUP 2008: ROBOT SOCCER WORLDCUP XII; [LECTURE NOTES IN COMPUTER SCIENCE; LECT. NOTES COMPUTER. SPRINGER INTERNATIONAL PUBLISHING, CHAM, 14. Februar 2019, 18-32